# EUROPEAN PATENT APPLICATION

(11) **EP 4 841 147 A1**
(43) Date of publication of application: **18.11.2026**
(21) Application number: 26748790.8
(22) Date of filing: 29.01.2026
(51) Int. Cl.: F16L 41/02, F16L 13/08, F16L 17/02, F25B 41/42

(54) **BRANCH PIPE AND REFRIGERATION APPARATUS**

(30) Priority: 30.01.2025 JP 2025013882; 28.01.2026 JP 2026011984
(71) Applicant: DAIKIN INDUSTRIES, LTD., Osaka-shi, Osaka 530-0001 (JP)
(72) Inventor: ONO, Asahi, Osaka-shi, Osaka 530-0001 (JP); ASHIDA, Keishi, Osaka-shi, Osaka 530-0001 (JP); KOIKE, Fumiaki, Osaka-shi, Osaka 530-0001 (JP)
(74) Representative: Hoffmann Eitle
(86) International application number: PCT/JP2026/003168
(87) International publication number: WO 2026/164235

(57) **Abstract**

In a branch pipe 10, a branch pipe main body 20 includes a sealing portion 28 that seals a first gap Z1 between an outer peripheral surface 31c of a first pipe joint 31 and a first opening 26a, a second gap Z2 between an outer peripheral surface 32c of a second pipe joint 32 and a second opening 26b, and a third gap Z3 between an outer peripheral surface 33c of a third pipe joint 33 and a third opening 26c, and a sealing portion 28 includes a brazing material layer S connecting the branch pipe main body 20 to the first pipe joint 31, the second pipe joint 32, and the third pipe joint 33.

## Description

### TECHNICAL FIELD

The present disclosure relates to a branch pipe and a refrigeration apparatus. The present application claims priority based on Japanese Patent Application No. 2025-013882 filed on January 30, 2025 and priority based on Japanese Patent Application No. 2026-011984 filed on January 28, 2026, and incorporates all the contents described in the above applications.

### BACKGROUND ART

Conventionally, a plate-type refrigerant pipe formed by bonding a stainless steel plate and connecting a coupling pipe perpendicularly to a plate surface is known (see Patent Literature 1).

### CITATION LIST

### [PATENT LITERATURE]

Patent Literature 1: Japanese Laid-Open Patent Publication No. 2021-071269

### SUMMARY OF THE INVENTION

### [TECHNICAL PROBLEM]

Since the plate-type refrigerant pipe needs to be subjected to burring when forming a connection portion for connecting the coupling pipe, processing difficulty is high. For this reason, it is difficult to produce a branch pipe that branches the flow of the refrigerant in the plate-type refrigerant pipe.

An object of the present disclosure is to obtain a branch pipe made of stainless steel by simple processing.

### [SOLUTION TO PROBLEM]

(1) A branch pipe of the present disclosure is a branch pipe that connects a first pipe, a second pipe, and a third pipe and branches a fluid flowing through the first pipe into the second pipe and the third pipe, the branch pipe including: a branch pipe main body configured to include a first plate-shaped member made of stainless steel and having a first surface, and a second plate-shaped member made of stainless steel and having a second surface disposed opposite to the first surface; a first pipe joint having a first joint portion connectable to the first pipe at one end in an axial direction; a second pipe joint having a second joint portion connectable to the second pipe at one end in the axial direction; and a third pipe joint having a third joint portion connectable to the third pipe at one end in the axial direction. The branch pipe main body includes: a joint portion that joins the first plate-shaped member and the second plate-shaped member;
   a flow path formed between the first surface and the second surface; and a first opening, a second opening, and a third opening which are formed by the first plate-shaped member and the second plate-shaped member at an end in the fluid flow direction in the flow path and communicate with the first pipe, the second pipe, and the third pipe, respectively. The first pipe joint has another end in the axial direction connected to the first opening, the second pipe joint has another end in the axial direction connected to the second opening, and the third pipe joint has another end in the axial direction connected to the third opening. The branch pipe main body includes: a sealing portion that seals a first gap between an outer peripheral surface of the first pipe joint and the first opening, a second gap between an outer peripheral surface of the second pipe joint and the second opening, and a third gap between an outer peripheral surface of the third pipe joint and the third opening. The sealing portion includes a brazing material layer connecting the branch pipe main body to the first pipe joint, the second pipe joint, and the third pipe joint.
   In the branch pipe of the present disclosure, a stainless steel branch pipe can be obtained by subjecting a stainless steel plate to simple processing.
(2) Preferably, in the branch pipe of the aspect (1) of the present disclosure, a distance between the first plate-shaped member and the second plate-shaped member increases in a portion where the first plate-shaped member and the second plate-shaped member form the first gap, the second gap, and the third gap from ends of the joint portion opposite to the first pipe joint, the second pipe joint, and the third pipe joint in directions toward central axes of the first pipe joint, the second pipe joint, and the third pipe joint.
(3) Preferably, in the branch pipe of the aspect (1) or (2) of the present disclosure, the first plate-shaped member includes a volume reducing portion that reduces an internal volume of at least one of the first gap, the second gap, or the third gap.
   In the branch pipe having the above configuration, the gap between each of the first, second, and third openings and each pipe joint can be reduced by providing the volume reducing portion, and thus, the amount of the brazing material used for sealing the gap can be reduced.
(4) Preferably, in the branch pipe of the aspect (3) of the present disclosure, the volume reducing portion includes a first plate thickness portion in which the plate thickness of the first plate-shaped member is a first plate thickness, and a second plate thickness portion in which the plate thickness of the first plate-shaped member is a second plate thickness smaller than the first plate thickness.
   In the branch pipe having the above configuration, the volume reducing portion can be easily provided by providing the first plate thickness portion and the second plate thickness portion having different plate thicknesses in the first plate-shaped member.
(5) Preferably, in the branch pipe of the aspect (4) of the present disclosure, the first plate-shaped member includes a straight plate portion and a curved plate portion, and the straight plate portion is the second plate thickness portion.
   In the branch pipe having the above configuration, the volume reducing portion can be easily provided by configuring the second plate thickness portion with the straight plate portion.
(6) Preferably, in the branch pipe of the aspect (4) of the present disclosure, the first plate-shaped member includes a straight plate portion and a curved plate portion, and the curved plate portion includes the second plate thickness portion.
   In the branch pipe having the above configuration, the volume reducing portion can be easily provided by providing the second plate thickness portion in the curved plate portion.
(7) Preferably, in the branch pipe of the aspect (4) of the present disclosure, the first plate-shaped member includes the first plate thickness portion in a portion forming at least one of the first gap, the second gap, or the third gap.
   In the branch pipe of the present disclosure, the volume reducing portion can be easily provided by providing the first plate thickness portion in the portion forming the gap in the first plate-shaped member.
(8) Preferably, in the branch pipe of the aspect (3) of the present disclosure, the volume reducing portion is configured by a protrusion protruding from the first plate-shaped member toward at least one of the first gap, the second gap, or the third gap.
   In the branch pipe of the present disclosure, the volume reducing portion can be easily provided by providing the protrusion at the portion forming the gap in the first plate-shaped member.
(9) Preferably, in the branch pipe of the aspect (8) of the present disclosure, the first plate-shaped member includes: a back surface that is a surface opposite to the first surface; and a recess formed in the back surface located on a back side of a position of the protrusion.
   In the branch pipe of the present disclosure, by pressing the back surface of the first plate-shaped member and providing the recess on the back surface, the protrusion can be easily provided at the portion forming the gap in the first plate-shaped member. Thus, the volume reducing portion can be easily provided.
(10) In the branch pipe of any one of the aspects (1) to (9) of the present disclosure, it is preferable that the branch pipe main body includes a first end having the first opening, and a second end having the second opening and the third opening, the joint portion includes a branch portion formed between the second opening and the third opening, and the branch portion includes a dividing portion that is located on the first end side of the branch portion and divides the fluid flowing in from the first opening to the second opening side and the third opening side, and a rectifying portion extending in a first direction substantially parallel to the axial direction of the second opening and the third opening from an end on the second end side of the dividing portion. Preferably, the formation length of the rectifying portion in the first direction is larger than an insertion margin of the second pipe joint in the second opening and an insertion margin of the third pipe joint in the third opening.
   In the branch pipe of the present disclosure, the fluid flowing out from the second opening and the third opening can be reliably rectified by the rectifying portion.
(11) Preferably, in the branch pipe of the aspect (10) of the present disclosure, the flow path includes a first flow path formed by the dividing portion, the first plate-shaped member, and the second plate-shaped member, and a second flow path formed by the rectifying portion, the first plate-shaped member, and the second plate-shaped member, and a flow path cross-sectional area of the first flow path is equal to or larger than a flow path cross-sectional area of the second flow path.
   The branch pipe of the present disclosure can suppress resistance that fluid receives from the dividing portion in the first flow path.
(12) Preferably, in the branch pipe of the aspect (10) or (11) of the present disclosure, the rectifying portion includes: a first portion on the first end side and a second portion on the second end side, and a width of the second portion in a second direction parallel to a mating surface of the first plate-shaped member and the second plate-shaped member in the branch portion and orthogonal to the first direction is smaller than a width of the first portion in the second direction.
   The branch pipe of the present disclosure can easily position the second pipe joint and the third pipe joint in the second opening and the third opening.
(13) Preferably, in the branch pipe of any one of the aspects (1) to (12) of the present disclosure, the joint portion includes a branch portion formed between the second opening and the third opening, and a first distance between the second pipe joint and the third pipe joint is larger than a thickness of the branch portion.
   The branch pipe of the present disclosure can secure the joining strength between the first plate-shaped member and the second plate-shaped member in the branch portion by securing the separation distance between the second pipe joint and the third pipe joint.
(14) Preferably, in the branch pipe of any one of the aspects (1) to (13) of the present disclosure, the first plate-shaped member includes: a first curved portion that is concave on the first surface side and a second curved portion that is convex on the first surface side, and when a bending radius of the first surface at the second curved portion is defined as a plate bending outer diameter (rₛₒ), outer diameters of the first pipe joint, the second pipe joint, and the third pipe joint are defined as a joint outer diameter (rₜ), a distance between the second pipe joint and the third pipe joint is defined as a first distance (W1), and a plate thickness of the first plate-shaped member is defined as a plate thickness (t), the first distance (W1) satisfies Formula 1 below, and the plate bending outer diameter (rₛₒ) satisfies Formula 2 below: Formula 1: $W 1 \geq 2 √ \left({\left({r}_{t}+{r}_{so}\right)}^{2}-{{r}_{so}}^{2}\right) - 2 {r}_{t}$ (where W1 is a first distance, rₛₒ is a plate bending outer diameter, and rₜ is a joint outer diameter), and Formula 2: ${r}_{so} \geq 2 t$ (where t is a plate thickness of the first plate-shaped member).
   In the branch pipe of the present disclosure, bending of the first plate-shaped member and the second plate-shaped member made of stainless steel is facilitated by securing the separation distance satisfying Formulas 1 and 2.
(15) Preferably, in the branch pipe of the aspect (14) of the present disclosure, the first plate-shaped member includes a straight plate portion and a curved plate portion, the joint portion includes a branch portion formed between the second opening and the third opening, the branch portion includes the straight plate portion, and when a width of the straight plate portion in the branch portion is defined as a first width (α) in a second direction parallel to a mating surface of the first plate-shaped member and the second plate-shaped member in the branch portion and orthogonal to a first direction substantially parallel to the axial direction of the second opening and the third opening,
   the first distance (W1) satisfies Formula 3 below: Formula 3: $W 1 \geq 2 √ \left({\left({r}_{t}+{r}_{so}\right)}^{2}-{{r}_{so}}^{2}\right) - {2 r}_{t} + α$
   (where W1 is a first distance, and α is a first width).
   The branch pipe of the present disclosure can improve strength of the branch pipe by securing the separation distance so as to satisfy Formula 3.
(16) Preferably, in the branch pipe of any one of the aspects (1) to (15) of the present disclosure, the first plate-shaped member includes a straight plate portion and a curved plate portion, and includes a first curved portion that is concave on the first surface side and a second curved portion that is convex on the first surface side, the joint portion includes a branch portion formed between the second opening and the third opening, and an outer edge joint portion other than the branch portion, a bending radius of the first surface at the second curved portion is defined as a plate bending outer diameter (rₛₒ), outer diameters of the first pipe joint, the second pipe joint, and the third pipe joint are defined as a joint outer diameter (rₜ), and a plate thickness of the first plate-shaped member is defined as a plate thickness (t), and when a width of the straight plate portion in the outer edge joint portion is defined as a second width (β) in a second direction parallel to a mating surface of the first plate-shaped member and the second plate-shaped member in the branch portion and orthogonal to a first direction substantially parallel to an axial direction of the second opening and the third opening, the second width (β) satisfies Formula 4 below, and when a distance from the first pipe joint, the second pipe joint, and the third pipe joint to an end of the outer edge joint portion is defined as a second distance (W2), the second distance (W2) satisfies Formula 5 below: Formula 4: $t \leq β \leq 20 t$
   (where rₛₒ is a plate bending outer diameter, rₜ is a joint outer diameter, β is a second width, and t is a plate thickness of the first plate-shaped member), and Formula 5: $W 2 \geq √ \left({\left({r}_{t}+{r}_{so}\right)}^{2}-{{r}_{so}}^{2}\right) - {r}_{t} + β$
   (where W2 is a second distance).
   The branch pipe of the present disclosure can improve the strength of the branch pipe by securing the distance from the pipe joint to the end of the outer edge joint portion so as to satisfy Formulas 4 and 5.
(17) Preferably, in the branch pipe of any one of the aspects (1) to (16) of the present disclosure, the first pipe, the second pipe, and the third pipe are refrigerant pipes through which a single refrigerant made of carbon dioxide or a mixed refrigerant containing carbon dioxide flows.
   The branch pipe of the present disclosure can be used in a refrigerant pipe for a single refrigerant made of carbon dioxide having a higher pressure than that of a conventional refrigerant or for a mixed refrigerant containing carbon dioxide.
(18) A refrigeration apparatus of the present disclosure includes the branch pipe of any one of the aspects (1) to (17).

In the refrigeration apparatus of the present disclosure, a branch pipe obtained by subjecting a stainless steel plate to simple processing can be used to easily configure the refrigeration apparatus including a refrigerant circuit having a higher pressure than a conventional refrigerant circuit.

### BRIEF DESCRIPTION OF DRAWINGS

[FIG. 1] FIG. 1 is a schematic diagram of a refrigeration apparatus according to an embodiment of the present disclosure.
[FIG. 2] FIG. 2 is a schematic perspective view schematically illustrating a branch pipe according to an embodiment of the present disclosure.
[FIG. 3] FIG. 3 is a schematic cross-sectional view illustrating a branch pipe according to an embodiment of the present disclosure.
[FIG. 4] FIG. 4 is an explanatory view of a branch pipe according to a first embodiment.
[FIG. 5] FIG. 5 is an explanatory view of a branch pipe according to a second embodiment.
[FIG. 6] FIG. 6 is an explanatory view of a branch pipe according to a third embodiment.
[FIG. 7A] FIG. 7A is an explanatory view of a branch pipe according to a fourth embodiment.
[FIG. 7B] FIG. 7B is an explanatory view of a branch pipe according to the fourth embodiment.
[FIG. 8A] FIG. 8A is an explanatory view of a branch pipe according to a fifth embodiment.
[FIG. 8B] FIG. 8B is an explanatory view of the branch pipe according to the fifth embodiment.
[FIG. 9] FIG. 9 is an explanatory view of the branch pipe according to the fifth embodiment.
[FIG. 10] FIG. 10 is an explanatory view of a modification of the branch pipe according to the fifth embodiment.
[FIG. 11A] FIG. 11A is an explanatory view of a branch pipe according to a sixth embodiment.
[FIG. 11B] FIG. 11B is an explanatory view of the branch pipe according to the sixth embodiment.
[FIG. 12] FIG. 12 is a schematic view of a branch pipe as viewed from a first opening side.
[FIG. 13] FIG. 13 is a schematic view of the branch pipe as viewed from a second opening and a third opening.
[FIG. 14] FIG. 14 is an explanatory view of a plate bending outer diameter and a joint outer diameter of a branch pipe.
[FIG. 15] FIG. 15 is an explanatory view of a modification of a branch portion in a branch pipe.
[FIG. 16] FIG. 16 is an explanatory view of a flow path of a branch pipe in a dividing portion and a rectifying portion.

### DETAILED DESCRIPTION

Hereinafter, a branch pipe of the present disclosure and a refrigeration apparatus including the branch pipe will be described in detail with reference to the accompanying drawings. Note that the present disclosure should not be limited to the following exemplifications, and is intended to include any modification recited in the claims within meanings and a scope equivalent to those of the claims.

### [Entire configuration of refrigeration apparatus]

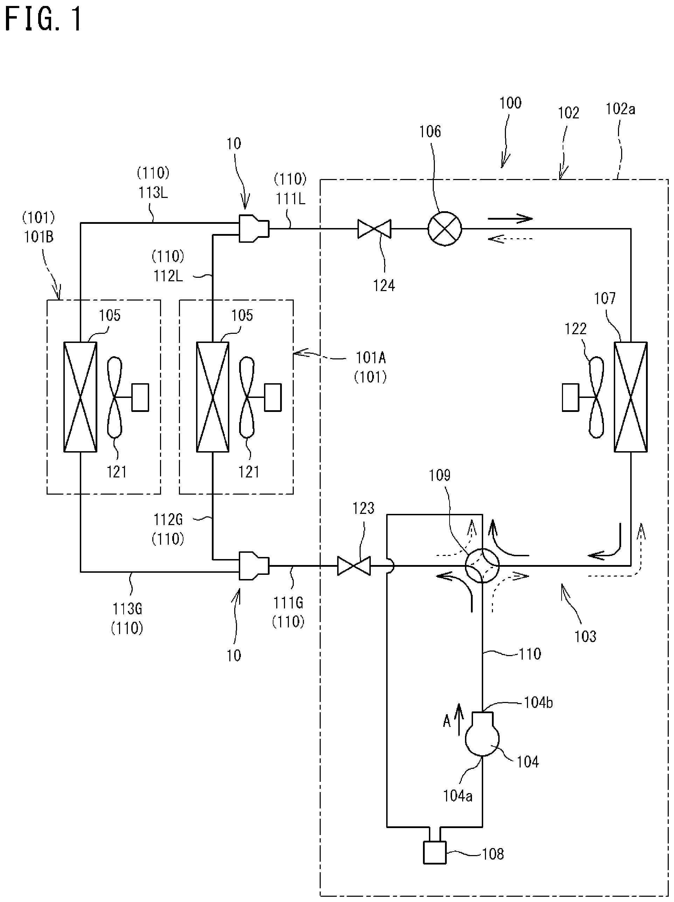

FIG. 1 is a schematic diagram of a refrigeration apparatus according to an embodiment of the present disclosure. A refrigeration apparatus 100 according to the present embodiment is an air conditioner that adjusts temperature and humidity in an air-conditioned room by a vapor compression refrigeration cycle. The refrigeration apparatus 100 includes a plurality of (two in the present embodiment) indoor units 101 installed indoors and an outdoor unit 102 installed outdoors. The indoor units 101 and the outdoor unit 102 are connected to each other by refrigerant pipes 110. The indoor units 101 include a first indoor unit 101 (hereinafter also referred to as a first indoor unit 101A) and a second indoor unit 101 (hereinafter also referred to as a second indoor unit 101B). Note that although the present embodiment illustrates the refrigeration apparatus 100 including the two indoor units 101, the refrigeration apparatus 100 of the present disclosure may include three or more indoor units 101.

The refrigeration apparatus 100 includes a refrigerant circuit 103 that executes a vapor compression refrigeration cycle. The refrigerant circuit 103 includes a plurality of element components and refrigerant pipes 110 connecting the plurality of element components. Each refrigerant pipe 110 includes a branch pipe 10 of the present disclosure. Note that the configuration of the branch pipe 10 will be described later in detail.

The refrigerant circuit 103 includes, as a plurality of element components, a compressor 104 that compresses a refrigerant to generate a high-temperature and high-pressure gas refrigerant, a plurality of indoor heat exchangers 105, an expansion valve 106 that decompresses the refrigerant, an outdoor heat exchanger 107, an accumulator 108, a four-way switching valve 109, and the like, which are connected by the refrigerant pipe 110.

The refrigeration apparatus 100 of the present disclosure uses, as the refrigerant, a single refrigerant made of carbon dioxide or a mixed refrigerant containing carbon dioxide (so-called natural refrigerant). The refrigerant flowing in the refrigerant circuit 103 has a pressure of 4.0 MPa or more (for example, about 8 to 14 MPa). Therefore, the refrigerant pipe 110 and the branch pipe 10 used in the refrigeration apparatus 100 have strength enough to withstand a pressure of 4.0 MPa or more. The refrigerant pipe 110 and the branch pipe 10 used in the refrigeration apparatus 100 are made of stainless steel, and have higher pressure resistance strength than, for example, a refrigerant pipe and a branch pipe used in a refrigerant circuit using a conventional refrigerant (for example, R32, R410A, and the like).

The compressor 104 compresses a low-pressure gas refrigerant and discharges a high-pressure gas refrigerant. The compressor 104 has a suction port or a suction portion 104a and a discharge port or a discharge portion 104b. The low-pressure gas refrigerant is suctioned through the suction portion 104a. The high-pressure gas refrigerant is discharged through the discharge portion 104b in the direction of arrow A. Examples of the compressor 104 include various compressors such as a scroll compressor. The compressor 104 is housed in a casing 102a of the outdoor unit 102. The accumulator 108 is provided on the refrigerant pipe 110 on the suction side of the compressor 104.

The indoor heat exchanger 105 is provided in an indoor unit 101 and executes heat exchange between a refrigerant and indoor air. Examples of the indoor heat exchanger 105 include a fin-and-tube heat exchanger of a cross-fin type and a heat exchanger of a microchannel type. An indoor fan 121 is disposed near the indoor heat exchanger 105. The indoor fan 121 blows indoor air to the indoor heat exchanger 105 and sends conditioned air into the room.

The expansion valve 106 is disposed in the refrigerant pipe 110 between the outdoor heat exchanger 107 and the indoor heat exchangers 105. The expansion valve 106 expands the passing refrigerant to decompress the refrigerant to a predetermined pressure. The expansion valve 106 of the present embodiment is an electronic expansion valve.

The outdoor heat exchanger 107 executes heat exchange between the refrigerant and outdoor air. Examples of the outdoor heat exchanger 107 include a fin-and-tube heat exchanger of a cross-fin type and a heat exchanger of a microchannel type. An outdoor fan 122 is disposed near the outdoor heat exchanger 107. The outdoor fan 122 blows outdoor air to the outdoor heat exchanger 107.

The refrigerant pipe 110 is provided with the four-way switching valve 109 for switching a refrigerant flow path, a gas shutoff valve 123, and a liquid shutoff valve 124. By switching the four-way switching valve 109, the refrigeration apparatus 100 can reverse a flow of the refrigerant, and switch the refrigerant discharged from the compressor 104 to be supplied to the outdoor heat exchanger 107 or the indoor heat exchanger 105, and thus an operation can be switched between a cooling operation and a heating operation.

The gas shutoff valve 123 and the liquid shutoff valve 124 open or close the refrigerant path. The opening and closing are performed manually, for example. When the refrigeration apparatus 100 is installed, the gas shutoff valve 123 and the liquid shutoff valve 124 are closed to prevent the refrigerant enclosed in the outdoor unit 102 from leaking outside, for example. On the other hand, when the refrigeration apparatus 100 is used, the gas shutoff valve 123 and the liquid shutoff valve 124 are opened.

During the heating operation of the refrigeration apparatus 100, by switching the four-way switching valve 109 as indicated by a solid line, the refrigerant flows in a direction indicated by an arrow of the solid line. As a result, the high-pressure gas refrigerant discharged from the compressor 104 in the direction of arrow A passes through the four-way switching valve 109, then passes through the gas shutoff valve 123 that is opened, and then enters the indoor heat exchanger 105. The high-pressure gas refrigerant radiates heat while the high-pressure gas refrigerant turns into a high-pressure liquid refrigerant in the indoor heat exchanger 105. The high-pressure liquid refrigerant reaches the expansion valve 106 via the liquid shutoff valve 124 that is opened, and is decompressed by the expansion valve 106. The decompressed refrigerant reaches the outdoor heat exchanger 107, absorbs heat in the outdoor heat exchanger 107, and turns into a low-pressure gas refrigerant. The low-pressure gas refrigerant is suctioned into the compressor 104 via the four-way switching valve 109 and the accumulator 108. During the heating operation, the indoor heat exchanger 105 functions as a radiator, and the outdoor heat exchanger 107 functions as a heat absorber.

On the other hand, during the cooling operation, the flow of the refrigerant is reversed by switching the four-way switching valve 109 as indicated by a dotted line, and the refrigerant flows in a direction indicated by an arrow of the dotted line. As a result, the high-pressure gas refrigerant discharged from the compressor 104 in the direction of arrow A passes through the four-way switching valve 109, and then enters the outdoor heat exchanger 107. The high-pressure gas refrigerant radiates heat while the high-pressure gas refrigerant turns into a high-pressure liquid refrigerant in the outdoor heat exchanger 107. The high-pressure liquid refrigerant reaches the expansion valve 106 and is decompressed by the expansion valve 106. The decompressed refrigerant reaches the indoor heat exchanger 105 via the opened liquid shutoff valve 124, absorbs heat in the indoor heat exchanger 105, and turns into a low-pressure gas refrigerant. The low-pressure gas refrigerant is suctioned into the compressor 104 via the gas shutoff valve 123 that is opened, the four-way switching valve 109, and the accumulator 108. During the cooling operation, the indoor heat exchanger 105 functions as a heat absorber, and the outdoor heat exchanger 107 functions as a radiator.

### [Refrigerant pipe]

As illustrated in FIG. 1, in refrigeration apparatus 100 of the present disclosure, the refrigerant pipe 110 includes a first pipe 111, a second pipe 112, and a third pipe 113. The refrigerant pipe 110 further includes the branch pipe 10 that connects the first pipe 111, the second pipe 112, and the third pipe 113. The first pipe 111, the second pipe 112, the third pipe 113, and the branch pipe 10 constitute a part of the refrigerant circuit 103. The first pipe 111, the second pipe 112, and the third pipe 113 are made of copper, and the branch pipe 10 is made of stainless steel. Note that, in the refrigerant pipe 110 of the present disclosure, the first pipe 111, the second pipe 112, and the third pipe 113 may be made of, for example, stainless steel, and are not limited to copper.

The first pipe 111 includes the refrigerant pipe 110 disposed inside the outdoor unit 102 and the refrigerant pipe 110 connecting the outdoor unit 102 and the branch pipe 10. The first pipe 111 includes a first liquid refrigerant pipe 111L and a first gas refrigerant pipe 111G. Liquid refrigerant flows through the first liquid refrigerant pipe 111L, and gas refrigerant flows through the first gas refrigerant pipe 111G.

The second pipe 112 is the refrigerant pipe 110 that connects the first indoor unit 101A and the branch pipe 10. The second pipe 112 includes a second liquid refrigerant pipe 112L and a second gas refrigerant pipe 112G. Liquid refrigerant flows through the second liquid refrigerant pipe 112L, and gas refrigerant flows through the second gas refrigerant pipe 112G.

The third pipe 113 is the refrigerant pipe 110 that connects the second indoor unit 101B and the branch pipe 10, and the third pipe 113 includes a third liquid refrigerant pipe 113L and a third gas refrigerant pipe 113G. Liquid refrigerant flows through the third liquid refrigerant pipe 113L, and gas refrigerant flows through the third gas refrigerant pipe 113G.

### [Branch pipe]

As illustrated in FIG. 1, a refrigeration apparatus 100 of the present disclosure includes two branch pipes 10 (referred to as a first branch pipe 10X and a second branch pipe 10Y). Note that the refrigeration apparatus 100 of the present disclosure may include three or more branch pipes 10 in accordance with the number of indoor units 101. In the present embodiment, the branch pipe 10 is used for connecting the indoor unit 101 and the outdoor unit 102, but the use of the branch pipe 10 of the present disclosure is not limited thereto, and may be used, for example, for a branch portion of an internal pipe of the outdoor unit 102. Note that, in the present embodiment, the branch pipe 10 is used for flowing a refrigerant which is an example of a fluid, but may be used for flowing a fluid (water, nitrogen gas, or the like) other than the refrigerant.

The first branch pipe 10X connects the first liquid refrigerant pipe 111L, the second liquid refrigerant pipe 112L, and the third liquid refrigerant pipe 113L. The first branch pipe 10X branches the liquid refrigerant flowing from the first liquid refrigerant pipe 111L, and causes the liquid refrigerant to flow out to the second liquid refrigerant pipe 112L and the third liquid refrigerant pipe 113L. Further, the first branch pipe 10X joins the liquid refrigerant flowing from the second liquid refrigerant pipe 112L and the third liquid refrigerant pipe 113L and causes the liquid refrigerant to flow out to the first liquid refrigerant pipe 111L.

The second branch pipe 10Y connects the first gas refrigerant pipe 111G to the second gas refrigerant pipe 112G and the third gas refrigerant pipe 113G. The second branch pipe 10Y branches the gas refrigerant flowing in from the first gas refrigerant pipe 111G, and causes the gas refrigerant to flow out to the second gas refrigerant pipe 112G and the third gas refrigerant pipe 113G. Further, the second branch pipe 10Y joins the gas refrigerant flowing from the second gas refrigerant pipe 112G and the third gas refrigerant pipe 113G and causes the gas refrigerant to flow out to the first gas refrigerant pipe 111G.

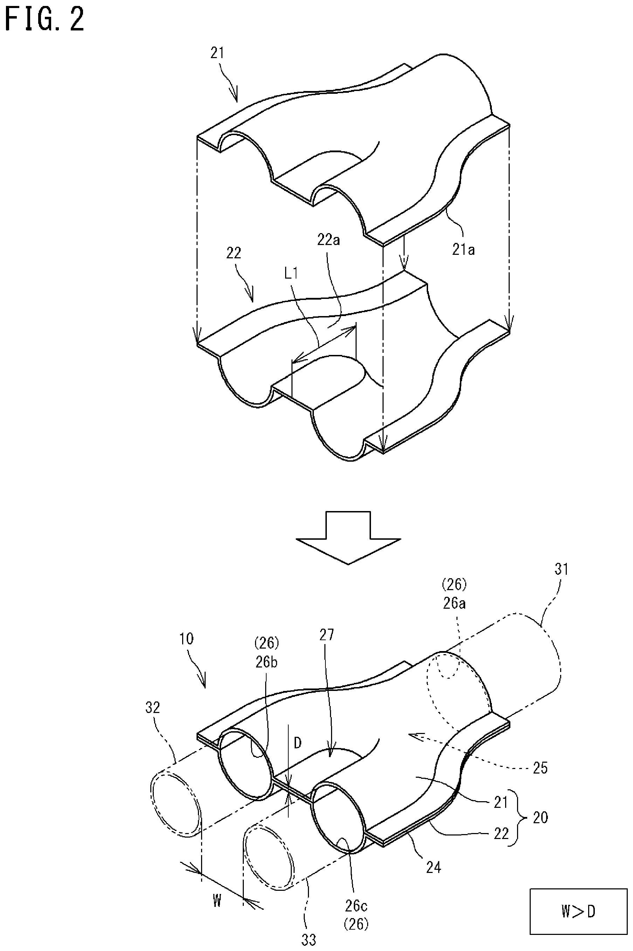

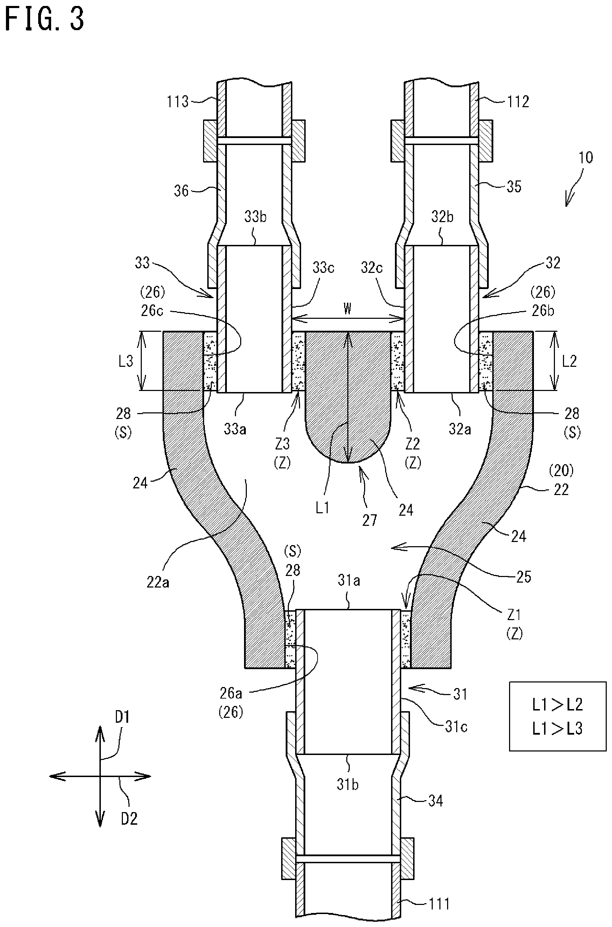

FIG. 2 is a schematic perspective view schematically illustrating a branch pipe according to an embodiment of the present disclosure. FIG. 3 is a schematic cross-sectional view illustrating a branch pipe according to an embodiment of the present disclosure. As illustrated in FIG. 2 and FIG. 3, the branch pipe 10 includes a branch pipe main body 20, a first pipe joint 31, a second pipe joint 32, and a third pipe joint 33. Note that, in FIG. 2, for convenience of explanation, illustration of some parts (a sealing portion 28, a first joint portion 34, a second joint portion 35, a third joint portion 36, and the like, which will be described later) is omitted.

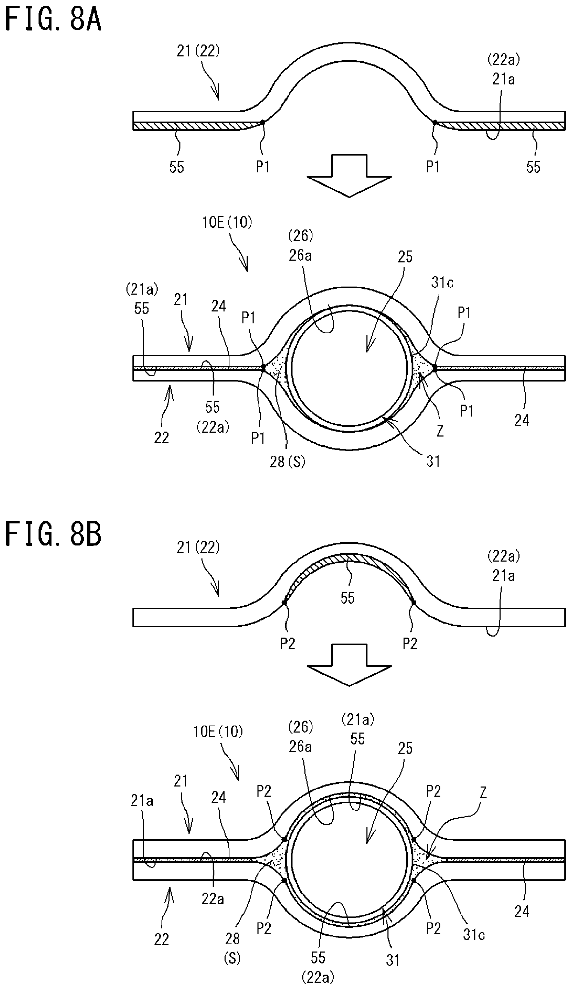

As illustrated in FIG. 2, the branch pipe main body 20 includes a first plate-shaped member 21 and a second plate-shaped member 22. The first plate-shaped member 21 and the second plate-shaped member 22 are members manufactured into a predetermined shape by pressing a stainless steel plate. The material of the first plate-shaped member 21 and the second plate-shaped member 22 is, for example, SUS304L. Note that, as will be described later, the first plate-shaped member 21 and the second plate-shaped member 22 may be further subjected to machining (for example, grinding processing, polishing processing, and the like) other than press working (see FIG. 8A and FIG. 8B).

The first plate-shaped member 21 has a first surface 21a. The first surface 21a is a surface on the inner side of the branch pipe main body 20 in the first plate-shaped member 21 assembled as the branch pipe main body 20. The second plate-shaped member 22 has a second surface 22a. The second surface 22a is a surface on the inner side of the branch pipe main body 20 in the second plate-shaped member 22 assembled as the branch pipe main body 20. The first plate-shaped member 21 and the second plate-shaped member 22 are disposed such that the first surface 21a and the second surface 22a face each other.

The branch pipe main body 20 further includes a joint portion 24. The branch pipe main body 20 is configured by joining the first plate-shaped member 21 and the second plate-shaped member 22 by the joint portion 24. The joint portion 24 of the present embodiment is configured by a layer made of a brazing material (sheet brazing) formed between the first surface 21a and the second surface 22a. In the branch pipe main body 20 of the present embodiment, the joint portion 24 is a portion where the first surface 21a and the second surface 22a are joined by brazing, but may be a portion (bead) where an outer surface (end surface) orthogonal to the first surface 21a of the first plate-shaped member 21 and an outer surface (end surface) orthogonal to the second surface 22a of the second plate-shaped member 22 are welded (Tig welding, laser welding, or the like).

The branch pipe main body 20 further includes a flow path 25 formed between the first surface 21a and the second surface 22a. The flow path 25 is a flow path (space) through which a fluid (refrigerant (liquid refrigerant or gas refrigerant) in the present embodiment) flows. The branch pipe main body 20 has a plurality of openings 26. The plurality of openings 26 include a first opening 26a, a second opening 26b, and a third opening 26c formed by the first plate-shaped member 21 and the second plate-shaped member 22 at an end of the flow path 25 in the refrigerant flow direction. The first opening 26a, the second opening 26b, and the third opening 26c are opened in a direction not intersecting the first surface 21a and the second surface 22a. The branch pipe 10 of the present embodiment has three openings 26 (first opening 26a, second opening 26b, and third opening 26c). The first opening 26a, the second opening 26b, and the third opening 26c are formed inside a cylindrical portion formed by the first plate-shaped member 21 and the second plate-shaped member 22, respectively. Note that, in the branch pipe 10 of the present disclosure, the openings 26 only needs to be provided at three or more locations, and may be provided at four locations, for example.

As described above, in the branch pipe 10 of the present disclosure, the branch pipe main body 20 can be easily manufactured by using the first plate-shaped member 21 and the second plate-shaped member 22 manufactured by pressing (bending) a stainless steel plate and joining them. In other words, the branch pipe 10 can be manufactured by simple processing such as pressing (bending) and welding.

The branch pipe main body 20 further includes a branch portion 27. The branch portion 27 is a portion that branches the refrigerant flowing into the flow path 25 from the first opening 26a into the second opening 26b side and the third opening 26c side. Further, the branch portion 27 is also a portion (merging portion) where the refrigerant flowing into the flow path 25 from the second opening 26b and the third opening 26c merges and flows toward the first opening 26a. In the branch pipe 10 of the present embodiment, the branch portion 27 is provided at one location, but may be provided at two or more locations according to the number of locations of the opening 26.

One end 31a of the first pipe joint 31 is inserted into the first opening 26a. One end 32a of the second pipe joint 32 is inserted into the second opening 26b. One end 33a of the third pipe joint 33 is inserted into the third opening 26c. The first pipe joint 31, the second pipe joint 32, and the third pipe joint 33 are furnace-brazed to the branch pipe main body 20 in the furnace.

In the branch pipe 10, leakage of the refrigerant from each gap (hereinafter referred to as a gap Z) between an outer peripheral surface 31c on the one end 31a side of the first pipe joint 31 and the first opening 26a, between an outer peripheral surface 32c on the one end 32a side of the second pipe joint 32 and the second opening 26b, and between an outer peripheral surface 33c on the one end 33a side of the third pipe joint 33 and the third opening 26c becomes a problem. Therefore, the branch pipe 10 further includes a sealing portion 28 that seals the gap Z. The form of the sealing portion 28 will be described in detail later.

The branch pipe 10 further includes a first joint portion 34 provided at the other end 31b of the first pipe joint 31, a second joint portion 35 provided at the other end 32b of the second pipe joint 32, and a third joint portion 36 provided at the other end 33b of the third pipe joint 33. The first joint portion 34, the second joint portion 35, and the third joint portion 36 are made of copper joints. The first joint portion 34, the second joint portion 35, and the third joint portion 36 made of copper can be connected to the first pipe 111, the second pipe 112, and the third pipe 113 by brazing on site. Note that, in the branch pipe 10 of the present disclosure, the first pipe joint 31, the second pipe joint 32, and the third pipe joint 33 may be made of a material other than copper, and are not limited to copper.

The branch pipe 10 constitutes a part of refrigerant pipe 110 by connecting the first joint portion 34 to the first pipe 111, connecting the second joint portion 35 to the second pipe 112, and connecting the third joint portion 36 to the third pipe 113.

### [Setting of dimensions of each part of branch pipe]

As illustrated in FIG. 2 and FIG. 3, the branch pipe 10 of the present embodiment includes a branch portion 27 formed between the second opening 26b and the third opening 26c. As illustrated in FIG. 3, in the branch pipe 10 of the present embodiment, a formation length L1 of the branch portion 27 in the axial direction of the second opening 26b and the third opening 26c is set to a length larger than an insertion margin L2 of the second pipe joint 32 in the second opening 26b and an insertion margin L3 of the third pipe joint 33 in the third opening 26c (L1 > L2, L1 > L3).

With such a configuration, the branch pipe 10 of the present embodiment can ensure pressure resistance performance that can withstand use of a refrigerant having a high pressure, and can reliably straighten the refrigerant flowing from the first pipe 111 to the second pipe 112 and the third pipe 113.

As illustrated in FIG. 2 and FIG. 3, in the branch pipe 10 of the present embodiment, the separation distance W between the second opening 26b and the third opening 26c is set to a distance larger than a thickness D of the branch portion 27 (W > D). The thickness D of the branch portion 27 is the sum of the respective thicknesses of the first plate-shaped member 21, the second plate-shaped member 22, and the joint portion 24.

With such a configuration, in the branch pipe 10 of the present embodiment, the insertion margin L2 of the second pipe joint 32 can be secured in the second opening 26b, and the insertion margin L3 of the third pipe joint 33 can be secured in the third opening 26c. As a result, the branch pipe 10 of the present embodiment can ensure pressure resistance performance that can withstand use of a natural refrigerant having a high pressure.

### [Sealing portion]

In the branch pipe 10 of the present disclosure, a brazing material layer S that connects each of the first to third pipe joints 31 to 33 and the branch pipe main body 20 can be used as the sealing portion 28. The brazing material layer S is a layer made of a brazing material. However, when the brazing material layer S is used as the sealing portion 28, it is necessary to supply an appropriate amount of the brazing material to the gap Z, and when the amount of the brazing material is not appropriate, shrinkage cavities may occur in the brazing material layer S. Since the shrinkage cavities are portions where the refrigerant may leak, the branch pipe 10 of the present disclosure preferably adopts a configuration that suppresses the leakage of the refrigerant from the shrinkage cavities in the brazing material layer S. Therefore, the branch pipe 10 of the present disclosure is configured based on any idea of 1) sealing the gap Z using a member other than the brazing material while allowing the occurrence of shrinkage cavities in the brazing material layer S, or 2) suppressing the occurrence of shrinkage cavities by reducing the gap Z and suppressing the use amount of the brazing material in the brazing material layer S.

### [Branch pipe according to first embodiment]

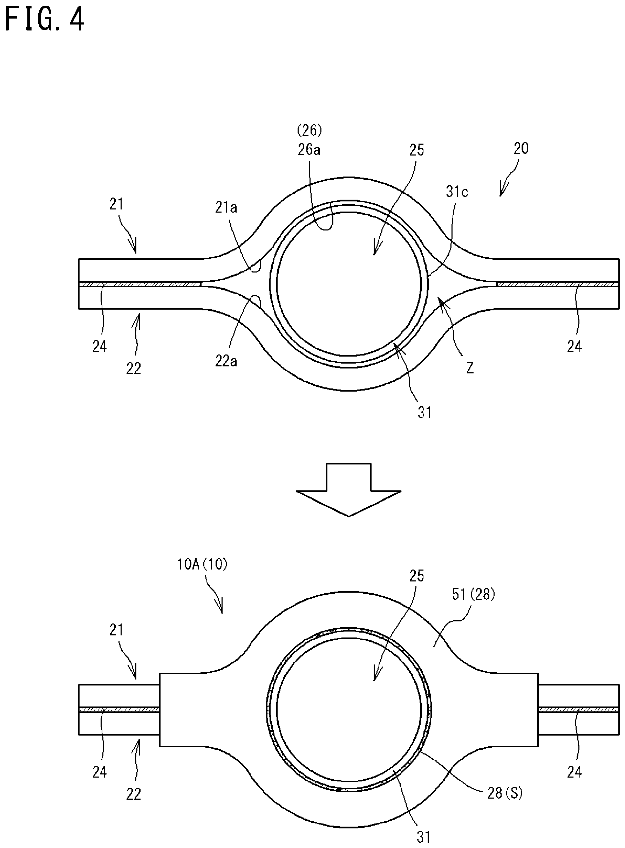

FIG. 4 is an explanatory view of a branch pipe according to a first embodiment. FIG. 4 illustrates the first embodiment of a branch pipe 10 of the present disclosure. In the present description, the branch pipe 10 according to the first embodiment is also referred to as a branch pipe 10A. As illustrated in FIG. 4, the branch pipe 10A according to the first embodiment is characterized in that an end plate 51 is provided. The upper view of FIG. 4 illustrates a state where the first opening 26a and the first pipe joint 31 are viewed from the axial direction with respect to the branch pipe main body 20 before the end plate 51 is installed. The lower view of FIG. 4 illustrates a state where the first opening 26a and the first pipe joint 31 are viewed from the axial direction with respect to the branch pipe main body 20 after the end plate 51 is installed. As illustrated in FIG. 4, the branch pipe 10A includes an end plate 51 that seals the gap Z between the first opening 26a and the first pipe joint 31. The end plate 51 is a part of the sealing portion 28. The branch pipe 10A seals the gap Z with the end plate 51 to suppress leakage of fluid (refrigerant) from the gap Z. Note that the branch pipe 10A allows the generation of shrinkage cavities in the brazing material. Therefore, in the branch pipe 10A, the gap Z need not be completely filled with the brazing material. Note that, in the branch pipe 10A, the gap Z may be completely filled with the brazing material.

As illustrated in FIG. 4, the end plate 51 is disposed at the end in the axial direction of the first opening 26a of the branch pipe main body 20. The end plate 51 is made of stainless steel. The end plate 51 is furnace-brazed to the end in the axial direction of the first opening 26a of the branch pipe main body 20 and to the first pipe joint 31.

FIG. 4 illustrates only end plate 51 disposed in first opening 26a, and illustration of end plate 51 disposed in second opening 26b and third opening 26c is omitted. In the branch pipe 10A, the end plate 51 is similarly disposed at the end in the axial direction of the second opening 26b of the branch pipe main body 20 and the end in the axial direction of the third opening 26c of the branch pipe main body 20.

In the branch pipe 10A, the end plate 51 need not be disposed in all of the first opening 26a, the second opening 26b, and the third opening 26c, and may be disposed in any one or more of the first opening 26a, the second opening 26b, and the third opening 26c. In other words, the branch pipe 10A includes the end plate 51 disposed on at least one of the end in the axial direction of the first opening 26a, the end in the axial direction of the second opening 26b, or the end in the axial direction of the third opening 26c.

In the branch pipe 10, when the entire gap Z between each of the openings 26a to 26c and each of the pipe joints 31 to 33 is filled with the brazing material, the required amount of brazing material increases, and the labor required for brazing increases (that is, brazing takes time). In the branch pipe 10A according to the first embodiment, since the gap Z is sealed by the end plate 51, it is not necessary to fill the gap Z with a brazing material. Therefore, the branch pipe 10A having the end plate 51 can suppress the use amount of the brazing material used for the sealing portion 28 and can reduce the time and effort required for brazing. Further, by reducing shrinkage cavities in the brazing material layer S, leakage of the refrigerant from the gap Z can be suppressed.

### [Branch pipe according to second embodiment]

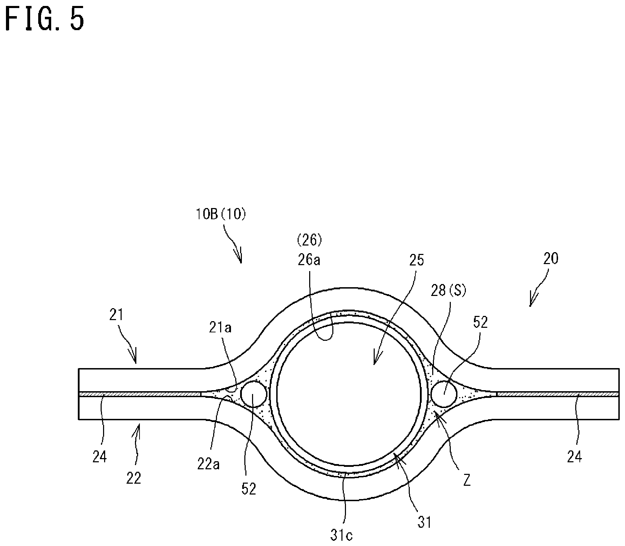

FIG. 5 is an explanatory view of a branch pipe according to a second embodiment. FIG. 5 illustrates the second embodiment of a branch pipe 10 of the present disclosure. In the present description, the branch pipe 10 according to the second embodiment is also referred to as a branch pipe 10B. As illustrated in FIG. 5, the branch pipe 10B according to the second embodiment is characterized in that it includes an insert 52. FIG. 5 illustrates a state in which the first opening 26a and the first pipe joint 31 in the branch pipe 10B are viewed from the axial direction. As illustrated in FIG. 5, the branch pipe 10B includes a sealing portion 28 that fills the gap Z between the first opening 26a and the first pipe joint 31. In the branch pipe 10B, the sealing portion 28 includes a brazing material filling the gap Z and an insert 52. The insert 52 is a part of the sealing portion 28. The branch pipe 10B can reduce shrinkage cavities in the brazing material layer S by reducing the gap Z by the insert 52 and suppressing the use amount of the brazing material, and thus leakage of the refrigerant from the gap Z can be suppressed. The insert 52 of the present embodiment is a stainless steel wire. Note that the insert 52 constituting the branch pipe 10B of the present embodiment is not limited to a stainless steel wire.

FIG. 5 illustrates only the insert 52 disposed in the first opening 26a, and illustration of the inserts 52 disposed in the second opening 26b and the third opening 26c is omitted. In the branch pipe 10B of the present embodiment, the inserts 52 are similarly arranged in the second opening 26b and the third opening 26c. In the branch pipe 10B, the inserts 52 need not be disposed in all of the first opening 26a, the second opening 26b, and the third opening 26c, and may be disposed in any one or more of the first opening 26a, the second opening 26b, and the third opening 26c. In other words, the branch pipe 10B includes the inserts 52 disposed in at least one of the first opening 26a, the second opening 26b, or the third opening 26c.

The first plate-shaped member 21 and the second plate-shaped member 22 are furnace-brazed in a state where the insert 52 is disposed in a region (gap Z) surrounded by the first plate-shaped member 21, the second plate-shaped member 22, and each of the pipe joints 31 to 33. In the branch pipe 10B according to the second embodiment, a part of the gap Z is filled with the insert 52, and the other gap Z is filled with a brazing material. The branch pipe 10B having such a configuration can reduce the amount of the brazing material required to fill the gap Z by the volume of the insert 52. Therefore, the branch pipe 10B can suppress the use amount of the brazing material used for the sealing portion 28 and can reduce the time and effort required for brazing. Further, shrinkage cavities in the brazing material layer S can be suppressed, and thus leakage of the refrigerant from the gap Z can be suppressed.

Preferably, in the branch pipe 10B of the present embodiment, the insert 52 disposed in the first opening 26a is connected to one of the inserts 52 disposed in the second opening 26b and one of the inserts 52 disposed in the third opening 26c. Further, preferably, in the branch pipe 10B of the present embodiment, the other of the inserts 52 arranged in the second opening 26b and the other of the inserts 52 arranged in the third opening 26c are connected. By using the inserts 52 having such a configuration, the number of inserts 52 can be reduced, and the labor of brazing can be reduced. The shrinkage cavities in the brazing material layer S can be reduced, and thus leakage of the refrigerant from the gap Z can be suppressed.

### [Branch pipe according to third embodiment]

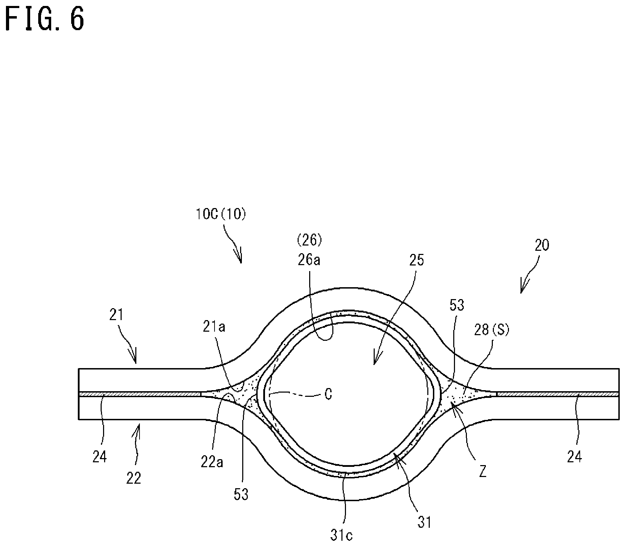

FIG. 6 is an explanatory view of a branch pipe according to a third embodiment. FIG. 6 illustrates the third embodiment of a branch pipe 10 of the present disclosure. In the present description, the branch pipe 10 according to the third embodiment is also referred to as a branch pipe 10C. As illustrated in FIG. 6, the branch pipe 10C according to the third embodiment is characterized in that the pipe joint includes a protrusion. FIG. 6 illustrates a state in which the first opening 26a and the first pipe joint 31 in the branch pipe 10C are viewed from the axial direction. As illustrated in FIG. 6, the branch pipe 10C includes a sealing portion 28 that fills the gap Z between the first opening 26a and the first pipe joint 31.

In the branch pipe 10C, the first pipe joint 31 includes a protrusion 53. The protrusion 53 is a portion that bulges the first pipe joint 31 toward the gap Z. The protrusion 53 bulges radially outward from an imaginary circle C (see FIG. 6) when the shape of the cross section orthogonal to the axial direction of the first pipe joint 31 is assumed to be a perfect circle. In other words, in the first pipe joint 31 having the protrusion 53, the shape of the cross section orthogonal to the axial direction is not a perfect circle. The branch pipe 10C can reduce shrinkage cavities in the brazing material layer S by reducing the gap Z by the protrusion 53 and suppressing the amount of the brazing material used, and thus leakage of the refrigerant from the gap Z can be suppressed.

FIG. 6 illustrates only the protrusion 53 of the first pipe joint 31, and illustration of protrusions 53 provided in the second pipe joint 32 and the third pipe joint 33 is omitted. In the branch pipe 10C, the second pipe joint 32 and the third pipe joint 33 have protrusions 53 similar to the first pipe joint 31. In the branch pipe 10C, all of the first pipe joint 31, the second pipe joint 32, and the third pipe joint 33 do not need to include the protrusion 53, and any one or more of the first pipe joint 31, the second pipe joint 32, and the third pipe joint 33 may include the protrusion 53. In other words, the branch pipe 10C includes the protrusion 53 disposed in at least one of the first pipe joint 31, the second pipe joint 32, or the third pipe joint 33.

The branch pipe 10C according to the third embodiment reduces the internal volume of the gap Z by providing the protrusion 53. Therefore, the branch pipe 10C can suppress the amount of the brazing material used for the sealing portion 28, and can reduce the time and effort required for brazing. Further, shrinkage cavities in the brazing material layer S can be suppressed, and thus leakage of the refrigerant from the gap Z can be suppressed.

### [Branch pipe according to fourth embodiment]

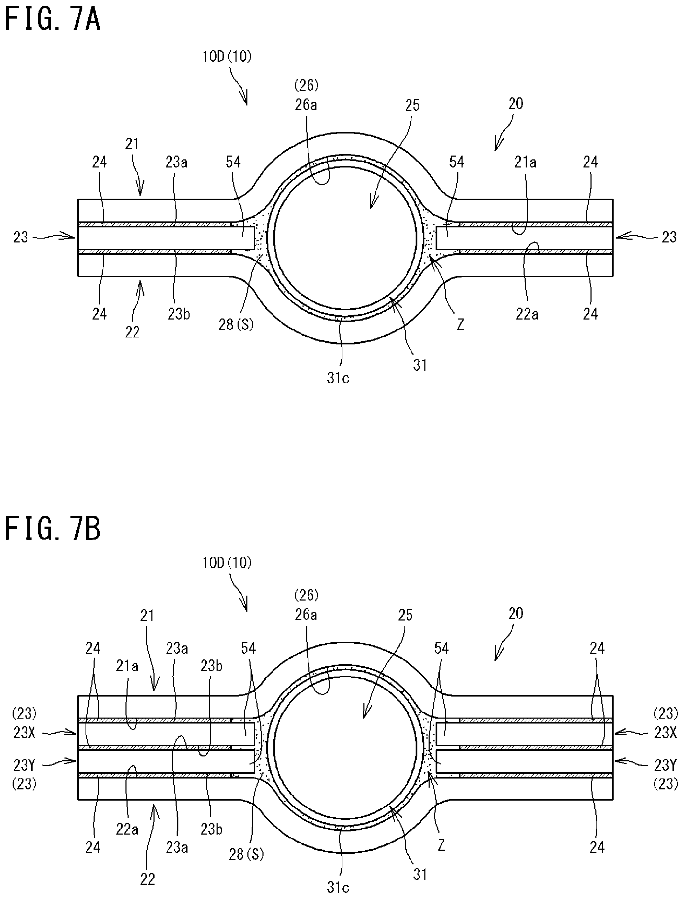

FIG. 7A and FIG. 7B are explanatory views of a branch pipe according to a fourth embodiment. FIG. 7A illustrates the fourth embodiment of a branch pipe 10 of the present disclosure. In the present description, the branch pipe 10 according to the fourth embodiment is also referred to as a branch pipe 10D. As illustrated in FIG. 7A, the branch pipe 10D according to the fourth embodiment is characterized in that a branch pipe main body 20 includes a third plate-shaped member 23. FIG. 7A illustrates a state in which the first opening 26a and the first pipe joint 31 in the branch pipe 10D are viewed from the axial direction. As illustrated in FIG. 7A, the branch pipe 10D includes a sealing portion 28 that fills the gap Z between the first opening 26a and the first pipe joint 31.

In the branch pipe 10D, the branch pipe main body 20 includes a third plate-shaped member 23. The third plate-shaped member 23 is a stainless steel plate (flat plate). The third plate-shaped member 23 has a third surface 23a facing the first surface 21a of the first plate-shaped member 21 and a fourth surface 23b facing the second surface 22a of the second plate-shaped member 22. The third surface 23a is joined to the first surface 21a by a joint portion 24. The fourth surface 23b is joined to the second surface 22a by the joint portion 24. In the branch pipe 10D, the first plate-shaped member 21 and the second plate-shaped member 22 are joined by the joint portion 24 via the third plate-shaped member 23.

In the branch pipe 10D, the third plate-shaped member 23 includes a protruding portion 54 that protrudes from the joint portion 24 to the first opening 26a. The branch pipe 10D can reduce shrinkage cavities in the brazing material layer S by reducing the gap Z by the protruding portion 54 and suppressing the use amount of the brazing material, and thus leakage of the refrigerant from the gap Z can be suppressed.

FIG. 7A illustrates only the protruding portion 54 disposed in the first opening 26a, and illustration of the protruding portion 54 disposed in the second opening 26b and the third opening 26c is omitted. In the branch pipe 10D, the third plate-shaped member 23 includes a protruding portion 54 that protrudes from the joint portion 24 to the second opening 26b and a protruding portion 54 that protrudes from the joint portion 24 to the third opening 26c. In the branch pipe 10D, the protruding portion 54 need not be disposed in all of the first opening 26a, the second opening 26b, and the third opening 26c, and may be disposed in any one or more of the first opening 26a, the second opening 26b, and the third opening 26c. In other words, the branch pipe 10D includes the protruding portion 54 disposed in at least one of the first opening 26a, the second opening 26b, or the third opening 26c.

The branch pipe 10D according to the fourth embodiment reduces the internal volume of the gap Z by providing the protruding portion 54. Therefore, the branch pipe 10D can suppress the use amount of the brazing material used for the sealing portion 28 and can reduce the time and effort required for brazing. Further, shrinkage cavities in the brazing material layer S can be suppressed, and thus leakage of the refrigerant from the gap Z can be suppressed.

Note that the branch pipe 10D may have a configuration illustrated in FIG. 7B. FIG. 7B illustrates a modification of the branch pipe 10D according to the fourth embodiment. As illustrated in FIG. 7B, the modification of the branch pipe 10D according to the fourth embodiment is characterized in that the branch pipe main body 20 includes a plurality of (two in the present embodiment) third plate-shaped members 23 (third plate-shaped members 23X and 23Y).

As illustrated in FIG. 7B, in the modification of the branch pipe 10D, the branch pipe main body 20 includes two third plate-shaped members 23. The third surface 23a of one third plate-shaped member 23X is joined to the first surface 21a by a joint portion 24. The fourth surface 23b of the one third plate-shaped member 23X is joined to the third surface 23a of the other third plate-shaped member 23Y by a joint portion 24. The fourth surface 23b of the other third plate-shaped member 23Y is joined to the second surface 22a by a joint portion 24. In the modification of the branch pipe 10D, the first plate-shaped member 21 and the second plate-shaped member 22 are joined by the joint portion 24 via the two third plate-shaped members 23X and 23Y.

In the modification of the branch pipe 10D according to the fourth embodiment, since the two third plate-shaped members 23 are provided, the ratio of the volume of the protruding portion 54 to the internal volume of the gap Z can be further increased, and thus the internal volume of the gap Z is further reduced as compared with the branch pipe 10D illustrated in FIG. 7A. Therefore, according to the modification of the branch pipe 10D, the use amount of the brazing material for the sealing portion 28 can be more greatly suppressed, and the labor required for brazing can be reduced. Further, shrinkage cavities in the brazing material layer S can be suppressed, and thus leakage of the refrigerant from the gap Z can be suppressed. Note that the number of third plate-shaped members 23 constituting a modification of the branch pipe 10D may be 3 or more.

### [Branch pipe according to fifth embodiment]

FIG. 8A and FIG. 8B are explanatory views of a branch pipe according to a fifth embodiment. FIG. 8A illustrates the fifth embodiment of a branch pipe 10 of the present disclosure. In the present description, the branch pipe 10 according to the fifth embodiment is also referred to as a branch pipe 10E. As illustrated in FIG. 8A, the branch pipe 10E according to the fifth embodiment is characterized in that a branch pipe main body 20 includes a machined portion 55. FIG. 8A illustrates a state in which the first opening 26a and the first pipe joint 31 in the branch pipe 10E are viewed from the axial direction. As illustrated in FIG. 8A, the branch pipe 10E includes a sealing portion 28 that fills the gap Z between the first opening 26a and the first pipe joint 31.

In the branch pipe 10E, the first plate-shaped member 21 and the second plate-shaped member 22 include a machined portion 55. In the branch pipe main body 20 illustrated in FIG. 8A, the machined portion 55 is formed on the flat plate portions of the first plate-shaped member 21 and the second plate-shaped member 22.

The machined portion 55 is a portion obtained by further performing machining (cutting in the present embodiment) on the first plate-shaped member 21 and the second plate-shaped member 22 formed by pressing a stainless steel plate (flat plate) or the like, and changing the shapes of parts of the first surface 21a and the second surface 22a. The machined portion 55 of the present embodiment is a portion obtained by cutting the first plate-shaped member 21 and the second plate-shaped member 22 and removing a part thereof to change the shapes of the first surface 21a and the second surface 22a. Note that the machined portion 55 may be a portion partially removed by machining (for example, grinding processing, polishing processing, and the like) other than cutting.

In the branch pipe 10E, when the first opening 26a is viewed from the axial direction, the machined portion 55 becomes a new first surface 21a of the first plate-shaped member 21 and a new second surface 22a of the second plate-shaped member 22. In the branch pipe 10E, the branch pipe main body 20 is configured by joining the first surface 21a (machined portion 55) and the second surface 22a (machined portion 55) by the joint portion 24.

When the machined portion 55 is not provided (see, for example, the upper view of FIG. 4), the shape of the first opening 26a when viewed from the axial direction is a shape (first shape) in which a change in the tangential direction is continuous. On the other hand, as illustrated in FIG. 8A, in the branch pipe 10E including the machined portion 55, the shape of the first opening 26a (machined portion 55) when viewed from the axial direction is a shape (second shape) having inflection points P1 at which a change in a tangential direction is discontinuous. The branch pipe 10E including this (second shape) can reduce the internal volume of the gap Z as compared with the branch pipe 10 including the (first shape). The branch pipe 10E can reduce shrinkage cavities in the brazing material layer S by reducing the gap Z and suppressing the amount of the brazing material used by the machined portion 55, and thus leakage of the refrigerant from the gap Z can be suppressed.

FIG. 8A illustrates only the machined portion 55 provided around the first opening 26a, and illustration of the machined portion 55 provided around the second opening 26b and the third opening 26c is omitted. The branch pipe 10E includes a machined portion 55 similar to that of the first opening 26a also around the second opening 26b and around the third opening 26c. In the branch pipe 10E, the machined portion 55 need not be disposed in all of the first opening 26a, the second opening 26b, and the third opening 26c, and the machined portion 55 may be provided in any one or more of the first opening 26a, the second opening 26b, and the third opening 26c. In other words, the branch pipe 10E includes the machined portion 55 disposed in at least one of the first opening 26a, the second opening 26b, or the third opening 26c.

In the branch pipe 10E according to the fifth embodiment, the internal volume of the gap Z is reduced by providing the machined portion 55. Therefore, the branch pipe 10E can suppress the use amount of the brazing material used for the sealing portion 28 and reduce the time and effort required for brazing. Further, shrinkage cavities in the brazing material layer S can be suppressed, and thus leakage of the refrigerant from the gap Z can be suppressed.

Note that the branch pipe 10E may have a configuration illustrated in FIG. 8B. FIG. 8B illustrates a modification of the branch pipe 10E according to the fifth embodiment. As illustrated in FIG. 8B, the modification of the branch pipe 10E according to the fifth embodiment is characterized in that the machined portion 55 is formed in an arc (curved) portion of the first plate-shaped member 21 and the second plate-shaped member 22.

As illustrated in FIG. 8B, in a modification of the branch pipe 10E according to the fifth embodiment, the machined portion 55 is formed in an arc (curved) portion. In the branch pipe 10E according to the modification, the machined portion 55 is a part of the first surface 21a of the first plate-shaped member 21 and a part of the second surface 22a of the second plate-shaped member 22.

In the branch pipe 10E according to the modification, the machined portion 55 when the first opening 26a is viewed from the axial direction has a shape (third shape) having inflection points P2 at which a change in a tangential direction is discontinuous. The branch pipe 10E including this (third shape) can reduce the internal volume of the gap Z as compared with the branch pipe 10 including the (first shape). Therefore, the branch pipe 10E according to the modification can suppress the use amount of the brazing material used for the sealing portion 28 and can reduce the time and effort required for brazing. Further, shrinkage cavities in the brazing material layer S can be suppressed, and thus leakage of the refrigerant from the gap Z can be suppressed.

### [Description from another viewpoint of branch pipe according to fifth embodiment]

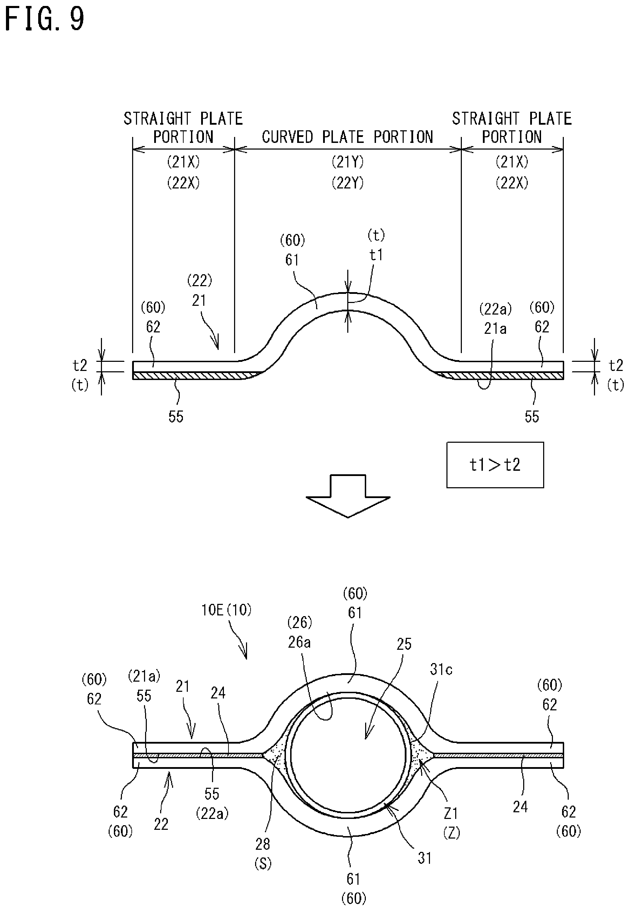

FIG. 9 is an explanatory view of a branch pipe according to a fifth embodiment. FIG. 9 illustrates a branch pipe 10E according to the fifth embodiment. Here, the branch pipe 10E according to the fifth embodiment will be further described from another viewpoint. Note that, in the branch pipe 10E illustrated in FIG. 9, the second plate-shaped member 22 has the same shape as the first plate-shaped member 21. Therefore, in the following description of the branch pipe 10E, the shape of the first plate-shaped member 21 will be mainly described, and the description of the shape of the second plate-shaped member 22 will be appropriately omitted.

FIG. 9 illustrates a state in which the first opening 26a and the first pipe joint 31 in the branch pipe 10E are viewed from the axial direction. As illustrated in FIG. 9, the branch pipe 10E includes a first gap Z1 formed between the first opening 26a and the first pipe joint 31.

In the branch pipe 10E illustrated in FIG. 9, the first plate-shaped member 21 includes a straight plate portion 21X and a curved plate portion 21Y. The straight plate portion 21X is a portion where the first plate-shaped member 21 has a flat plate shape. The curved plate portion 21Y is a portion where the first plate-shaped member 21 is curved by bending. The second plate-shaped member 22 includes a straight plate portion 22X and a curved plate portion 22Y. The straight plate portion 22X is a portion where the second plate-shaped member 22 has a flat plate shape. The curved plate portion 22Y is a portion where the second plate-shaped member 22 is curved by bending.

In the branch pipe 10E, the first plate-shaped member 21 and the second plate-shaped member 22 include a volume reducing portion 60. A volume reducing portion 60 is a portion that plays a role of reducing the internal volume of the gap Z. In the branch pipe 10E, the volume reducing portion 60 includes a first plate thickness portion 61 and a second plate thickness portion 62. In the branch pipe 10E, the plate thickness t of the first plate thickness portion 61 is defined as a first plate thickness t1, and the plate thickness t of the second plate thickness portion 62 is defined as a second plate thickness t2. In the branch pipe 10E, the second plate thickness t2 of the second plate thickness portion 62 is smaller than the first plate thickness t1 of the first plate thickness portion 61 (t1 > t2).

In the branch pipe 10E illustrated in FIG. 9, the first plate thickness portion 61 is a curved plate portion 21Y, and the second plate thickness portion 62 is a straight plate portion 21X. In the branch pipe 10E illustrated in FIG. 9, the second plate thickness portion 62 is a portion obtained by performing machining (for example, cutting) on the straight plate portion 21X of the first plate-shaped member 21 and changing the shape of a part of the first surface 21a. In other words, in the branch pipe 10E of the present embodiment, the straight plate portion 21X includes the machined portion 55. Note that the second plate thickness portion 62 may be a portion obtained by removing a part of the straight plate portion 21X by processing other than cutting (for example, grinding processing, polishing processing, and the like).

In the branch pipe 10E, the first gap Z1 can be reduced by providing the volume reducing portion 60 including the first plate thickness portion 61 and the second plate thickness portion 62 having different plate thicknesses t. The branch pipe 10E can suppress the use amount of the brazing material and reduce shrinkage cavities in the brazing material layer S by reducing the first gap Z1, thereby suppressing leakage of the refrigerant from the first gap Z1.

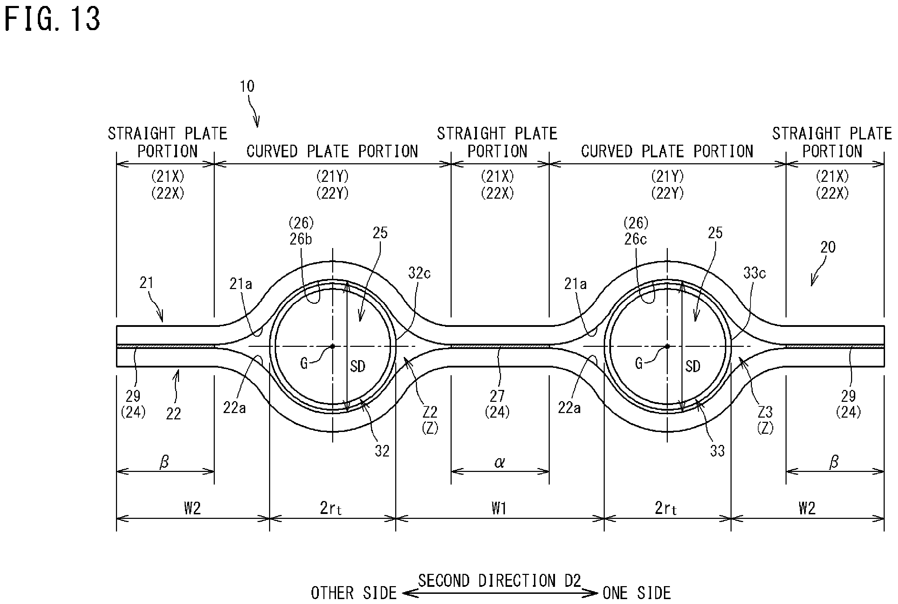

Note that, although detailed description is omitted in the present description, in the branch pipe 10E illustrated in FIG. 9, the volume reducing portion 60 including the first plate thickness portion 61 and the second plate thickness portion 62 is provided together in the straight plate portion 21X and the curved plate portion 21Y on the second opening 26b and the third opening 26c side. In this case, the volume reducing portion 60 (not illustrated) provided on the second opening 26b and the third opening 26c side can reduce a second gap Z2 and a third gap Z3 (see FIG. 13 described later). In the branch pipe 10E illustrated in FIG. 9, the volume reducing portion 60 only needs to be able to reduce the internal volume of at least one of the first gap Z1, the second gap Z2, or the third gap Z3.

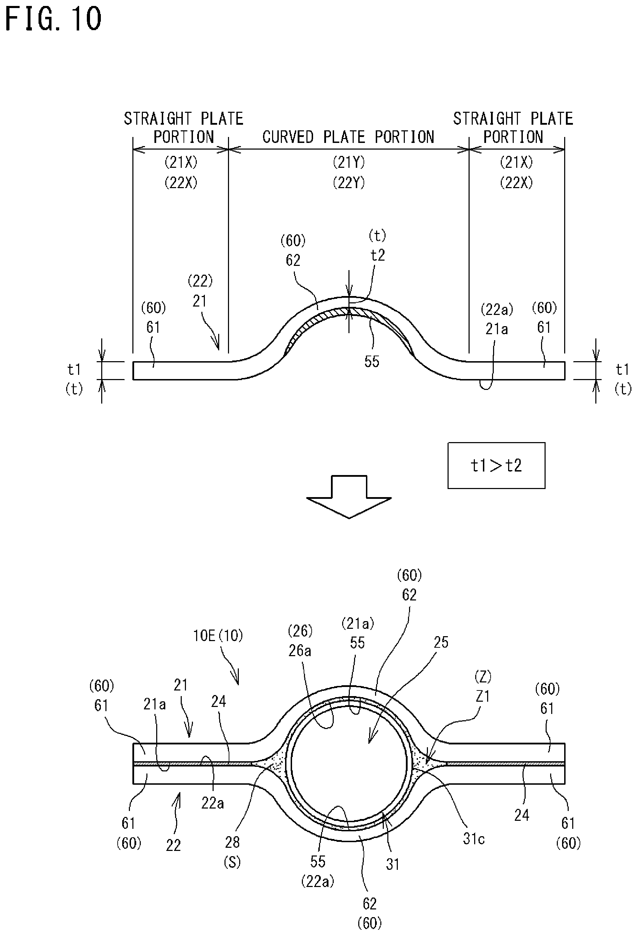

FIG. 10 is an explanatory view of a modification of the branch pipe according to the fifth embodiment. FIG. 10 illustrates a modification of the branch pipe 10E according to the fifth embodiment. Note that the branch pipe 10E may have a configuration illustrated in FIG. 10. As illustrated in FIG. 10, the modification of the branch pipe 10E is different from the branch pipe 10E illustrated in FIG. 9 in that the curved plate portion 21Y of the first plate-shaped member 21 has the second plate thickness portion 62.

In the branch pipe 10E illustrated in FIG. 10, the second plate thickness t2 of the second plate thickness portion 62 is smaller than the first plate thickness t1 of the first plate thickness portion 61 (t1 > t2). In the branch pipe 10E illustrated in FIG. 10, the straight plate portion 21X is the first plate thickness portion 61, and the curved plate portion 21Y has the second plate thickness portion 62.

In the branch pipe 10E illustrated in FIG. 10, the curved plate portion 21Y of the first plate-shaped member 21 formed by pressing a stainless steel plate (flat plate) is further subjected to machining (cutting in the present embodiment), and a shape of a part of the first surface 21a is changed. The second plate thickness portion 62 of the present embodiment is a portion obtained by cutting the curved plate portion 21Y of the first plate-shaped member 21 and removing a part thereof to change the shape of the first surface 21a. In other words, in the branch pipe 10E of the present embodiment, the curved plate portion 21Y includes the machined portion 55. Note that the second plate thickness portion 62 may be a portion obtained by removing a part of the curved plate portion 21Y by processing other than cutting (for example, grinding processing, polishing processing, and the like).

In the branch pipe 10E, the first gap Z1 is reduced by providing the volume reducing portion 60 including the first plate thickness portion 61 and the second plate thickness portion 62 having different plate thicknesses, and the use amount of the brazing material is suppressed, so that it is possible to reduce shrinkage cavities in the brazing material layer S, thereby suppressing leakage of the refrigerant from the first gap Z1.

Note that, although detailed description is omitted in the present description, in a modification of the branch pipe 10E illustrated in FIG. 10, the volume reducing portion 60 including the first plate thickness portion 61 and the second plate thickness portion 62 is provided together in the straight plate portion 21X and the curved plate portion 21Y on the second opening 26b and the third opening 26c side. In this case, the volume reducing portion 60 (not illustrated) provided on the second opening 26b and the third opening 26c side can reduce a second gap Z2 and a third gap Z3 (see FIG. 13 described later). In the modification of the branch pipe 10E illustrated in FIG. 10, the volume reducing portion 60 only needs to be able to reduce the internal volume of at least one of the first gap Z1, the second gap Z2, or the third gap Z3.

As described above, in the branch pipe 10E of the present embodiment illustrated in FIG. 9 and FIG. 10, the internal volume of at least one of the first gap Z1, the second gap Z2, or the third gap Z3 can be reduced by the combination of the first plate thickness portion 61 and the second plate thickness portion 62. Therefore, in the branch pipe 10E of the present embodiment, the volume reducing portion 60 can be easily provided.

### [Branch pipe according to sixth embodiment]

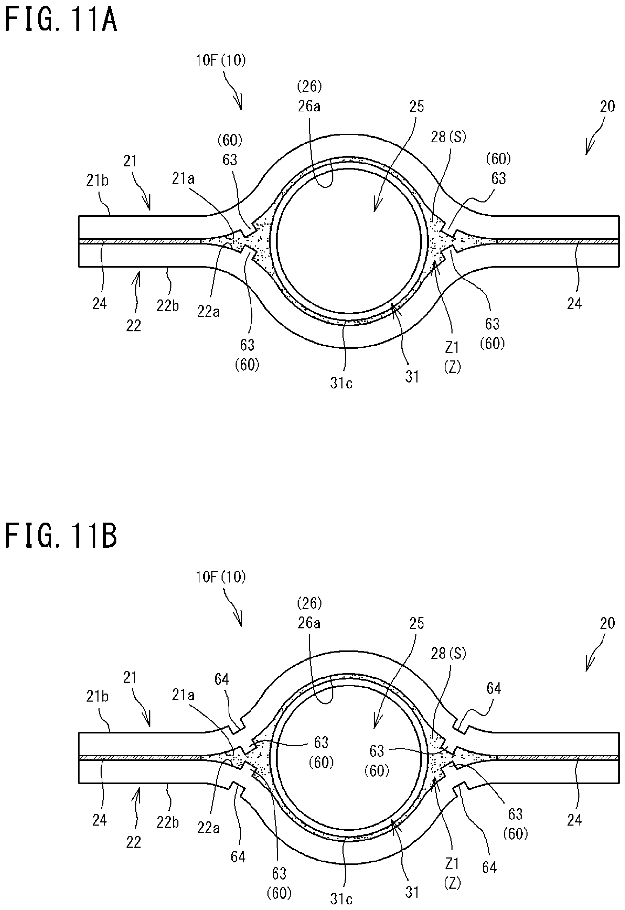

FIG. 11A is an explanatory view of a branch pipe according to a sixth embodiment. FIG. 11A illustrates a branch pipe 10F which is a branch pipe 10 according to the sixth embodiment. FIG. 11A illustrates a state in which the first opening 26a and the first pipe joint 31 in the branch pipe 10F are viewed from the axial direction. Note that, in the branch pipe 10F illustrated in FIG. 11A, the second plate-shaped member 22 has the same shape as the first plate-shaped member 21. Therefore, in the following description of the branch pipe 10F, the shape of the first plate-shaped member 21 will be described, and the description of the shape of the second plate-shaped member 22 will be omitted.

In the following description, the joint portion 24 is defined as a portion constituted by the first plate-shaped member 21, the second plate-shaped member 22, and a layer made of a brazing material (sheet brazing) formed between the first surface 21a and the second surface 22a.

As illustrated in FIG. 11A, the branch pipe 10F includes a volume reducing portion 60. In the branch pipe 10F, the volume reducing portion 60 is configured by a protrusion 63. The protrusion 63 reduces the internal volume of the first gap Z1.

As illustrated in FIG. 11A, the protrusion 63 is formed in a portion of the first surface 21a of the first plate-shaped member 21 that forms the first gap Z1 with the first pipe joint 31. The protrusion 63 is a part obtained by changing the shape of a part of the first surface 21a, and protrudes from the first surface 21a toward the first gap Z1.

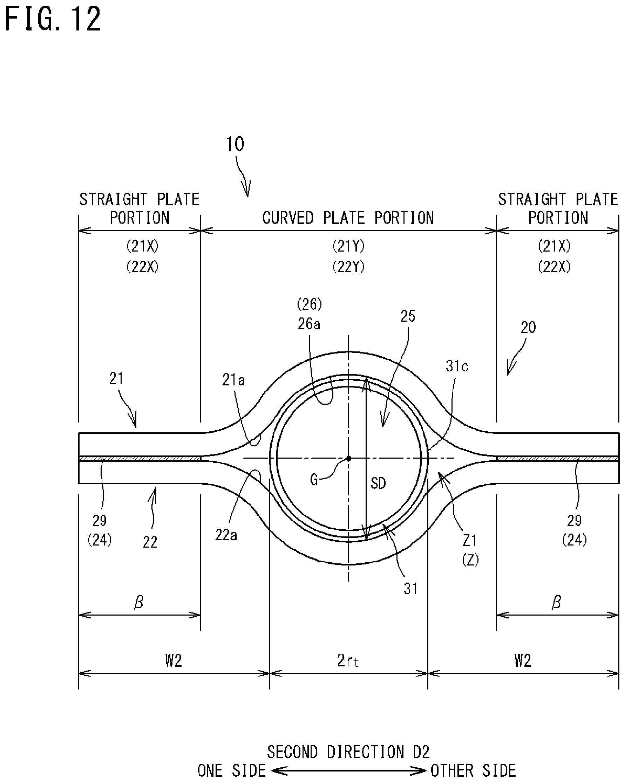

In the first gap Z1 of the branch pipe 10F, the increase amount of the distance (inter-surface distance SD to be described later, see FIG. 12) between the first surface 21a of the first plate-shaped member 21 and the second surface 22a of the second plate-shaped member 22 increases from the joint portion 24 toward the axial center of the first pipe joint 31. However, in the portion where the protrusion 63 is formed, the increase amount of the distance between the first plate-shaped member 21 and the second plate-shaped member 22 is small.

The protrusion 63 illustrated in FIG. 11A is formed, for example, by welding a protruding member to the first surface 21a of the first plate-shaped member 21. The protrusion 63 may be continuously formed substantially parallel to the axial direction of the first pipe joint 31, or may be intermittently formed at predetermined intervals while being substantially parallel to the axial direction of the first pipe joint 31. Note that, in the present embodiment, the protrusion 63 is formed by welding, but the method of forming the protrusion 63 is not limited thereto, and the protrusion may be formed by a method other than welding.

Note that, although detailed description is omitted in the present description, in the branch pipe 10F illustrated in FIG. 11A, the volume reducing portion 60 including the protrusion 63 is provided together on the second opening 26b side and the third opening 26c side. In this case, the volume reducing portion 60 (not illustrated) provided on the second opening 26b and the third opening 26c side protrudes from the first surface 21a toward the second gap Z2 and the third gap Z3. Note that, in the branch pipe 10F illustrated in FIG. 11A, the volume reducing portion 60 including the protrusion 63 only needs to be able to reduce the internal volume of at least one of the first gap Z1, the second gap Z2, or the third gap Z3.

### [Modification of branch pipe according to sixth embodiment]

FIG. 11B is an explanatory view of a modification of the branch pipe according to the sixth embodiment. FIG. 11B illustrates a modification of the branch pipe 10F which is a branch pipe 10 according to the sixth embodiment. FIG. 11B illustrates a state in which the first opening 26a and the first pipe joint 31 in the branch pipe 10F are viewed from the axial direction. Note that, in the modification of the branch pipe 10F illustrated in FIG. 11B, the second plate-shaped member 22 has the same shape as the first plate-shaped member 21. Therefore, in the following description of the modification of the branch pipe 10F, the shape of the first plate-shaped member 21 will be described, and the description of the shape of the second plate-shaped member 22 will be omitted.

As illustrated in FIG. 11B, a modification of the branch pipe 10F includes a protrusion 63 and a recess 64. In the modification of the branch pipe 10F, the protrusion 63 is formed, for example, by punching a back surface 21b at the position where the protrusion 63 is formed. In other words, in the modification of the branch pipe 10F, the recess 64 is formed by applying striking to the back surface 21b, whereby the protrusion 63 protruding from the first surface 21a is formed. In this case, the first plate-shaped member 21 includes the protrusion 63 and the recess 64 that form a pair on the front and back sides.

As illustrated in FIG. 11B, the protrusion 63 is formed in a portion of the first surface 21a of the first plate-shaped member 21 that forms the first gap Z1 with the first pipe joint 31. The protrusion 63 protrudes from the first surface 21a toward the first gap Z1. The protrusion 63 is a portion obtained by changing a shape of a part of the first surface 21a. The protrusion 63 and the recess 64 may be continuously formed substantially parallel to the axial direction of the first pipe joint 31, or may be intermittently formed at predetermined intervals while being substantially parallel to the axial direction of the first pipe joint 31.

Note that, although detailed description is omitted in the present description, in the modification of the branch pipe 10F illustrated in FIG. 11B, the volume reducing portion 60 including the protrusion 63 is provided together on the second opening 26b side and the third opening 26c side. In this case, the volume reducing portion 60 (not illustrated) provided on the second opening 26b and the third opening 26c side protrudes from the first surface 21a toward the second gap Z2 and the third gap Z3. Note that, in the modification of the branch pipe 10F illustrated in FIG. 11B, the volume reducing portion 60 including the protrusion 63 only needs to be able to reduce the internal volume of at least one of the first gap Z1, the second gap Z2, or the third gap Z3.

### [Branch pipe main body]

In the branch pipe 10 according to the first to sixth embodiments described above, the branch pipe main body 20 includes the sealing portion 28 that seals the first gap Z1 between the outer peripheral surface 31c of the first pipe joint 31 and the first opening 26a, the second gap Z2 between the outer peripheral surface 32c of the second pipe joint 32 and the second opening 26b, and the third gap Z3 between the outer peripheral surface 33c of the third pipe joint 33 and the third opening 26c. The sealing portion 28 includes the brazing material layer S that connects the branch pipe main body 20 to the first pipe joint 31, the second pipe joint 32, and the third pipe joint 33 (see FIG. 3). With the branch pipe 10 having such a configuration, the branch pipe made of stainless steel can be obtained by subjecting a stainless steel plate to simple processing.

### [Dimensional relationship of each part of branch pipe]

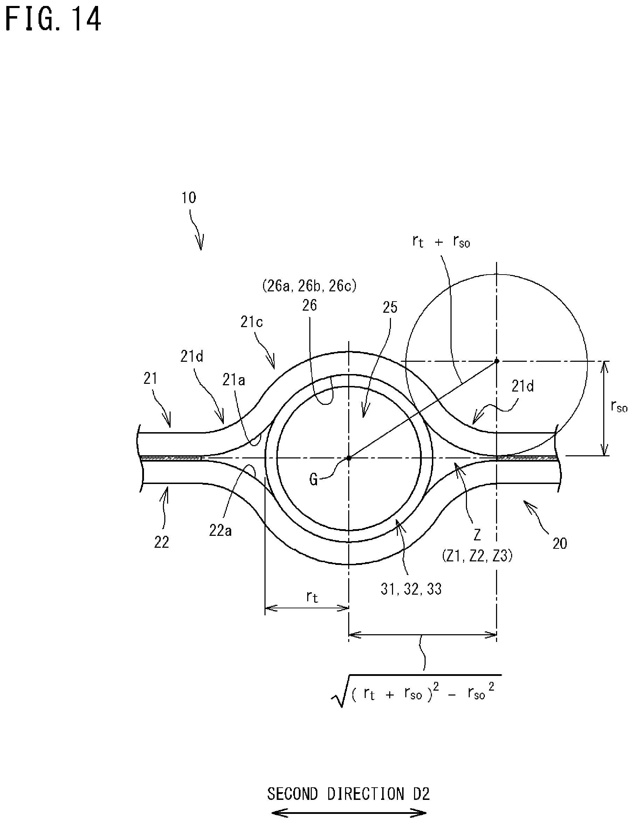

FIG. 12 is a schematic view of the branch pipe as viewed from the first opening side. FIG. 13 is a schematic view of the branch pipe as viewed from the second opening and the third opening. FIG. 14 is an explanatory view of a plate bending outer diameter and a joint outer diameter of the branch pipe. Here, the dimensional relationship of each part of the branch pipe 10 of the present disclosure will be described in detail with reference to FIG. 12, FIG. 13, and FIG. 14. The dimensional relationship of each part described here is commonly applied to the branch pipe 10 (the branch pipe 10A to the branch pipe 10F) of each embodiment described in the present description. Note that, in FIG. 12, FIG. 13, and FIG. 14, illustration of the sealing portion 28 (brazing material layer S) filling the gap Z is omitted for convenience of description.

As illustrated in FIG. 12 and FIG. 13, in the branch pipe 10 of the present disclosure, the first plate-shaped member 21 includes a straight plate portion 21X and a curved plate portion 21Y, and the second plate-shaped member 22 includes a straight plate portion 22X and a curved plate portion 22Y. As illustrated in FIG. 12, the branch pipe 10 includes a gap Z (hereinafter, also referred to as a first gap Z1) formed with the first pipe joint 31 at a portion where the curved plate portion 21Y of the first plate-shaped member 21 and the curved plate portion 22Y of the second plate-shaped member 22 face each other. As illustrated in FIG. 13, the branch pipe 10 includes a gap Z (hereinafter, also referred to as a second gap Z2) formed with the second pipe joint 32 at a portion where the curved plate portion 21Y of the first plate-shaped member 21 and the curved plate portion 22Y of the second plate-shaped member 22 face each other. The branch pipe 10 includes a gap Z (hereinafter, also referred to as a third gap Z3) formed with the third pipe joint 33 at a portion where the curved plate portion 21Y of the first plate-shaped member 21 and the curved plate portion 22Y of the second plate-shaped member 22 face each other.

In the following description, the direction in the branch pipe 10 is defined as follows. A direction parallel to the axial direction of the first pipe joint 31, the second pipe joint 32, and the third pipe joint 33 is defined as a first direction D1 (see FIG. 3). Note that the first direction D1 includes not only a direction strictly parallel to the axial direction of the first pipe joint 31, the second pipe joint 32, and the third pipe joint 33 but also a direction substantially parallel to the axial direction of the first pipe joint 31, the second pipe joint 32, and the third pipe joint 33. At the positions where the straight plate portions 21X and 22X exist, a direction orthogonal to the plate thickness direction of the first plate-shaped member 21 and the second plate-shaped member 22 and orthogonal to the first direction D1 is defined as a second direction D2 (see FIG. 3).

As illustrated in FIG. 12 and FIG. 13, the branch pipe 10 includes a joint portion 24 in which the first plate-shaped member 21 and the second plate-shaped member 22 are joined. The joint portion 24 of the present embodiment includes the first plate-shaped member 21, the second plate-shaped member 22, and a layer made of a brazing material (sheet brazing) formed between the first surface 21a and the second surface 22a. The joint portion 24 includes a branch portion 27 formed between the second gap Z2 and the third gap Z3 and an outer edge joint portion 29 which is the joint portion 24 other than the branch portion 27.

As illustrated in FIG. 12, the first gap Z1 of the branch pipe 10 is formed between the curved plate portion 21Y and the first pipe joint 31. In the first gap Z1, the inter-surface distance SD between the first plate-shaped member 21 and the second plate-shaped member 22 increases in the direction from an end of the joint portion 24 on the side opposite to the first pipe joint 31 toward an axial center position (central axis G) of the first pipe joint 31. In other words, in the first gap Z1, the inter-surface distance SD increases from the end of the joint portion 24 on the first pipe joint 31 side toward the axial center position (central axis G) of the first pipe joint 31. The first gap Z1 is a three-dimensional space extending in the first direction D1 (the axial direction of the first pipe joint 31).

As illustrated in FIG. 13, the second gap Z2 of the branch pipe 10 is formed between the curved plate portion 21Y and the second pipe joint 32. In the second gap Z2, the inter-surface distance SD between the first plate-shaped member 21 and the second plate-shaped member 22 increases in the direction from an end of the joint portion 24 on the side opposite to the second pipe joint 32 toward the axial center position (central axis G) of the second pipe joint 32. In other words, in the second gap Z2, the inter-surface distance SD increases from the end of the joint portion 24 on the second pipe joint 32 side toward the axial center position (central axis G) of the second pipe joint 32. The second gap Z2 is a three-dimensional space extending in the first direction D1 (the axial direction of the second pipe joint 32).

As illustrated in FIG. 13, the third gap Z3 of the branch pipe 10 is formed between the curved plate portion 21Y and the third pipe joint 33. In the third gap Z3, the inter-surface distance SD between the first plate-shaped member 21 and the second plate-shaped member 22 increases in the direction from an end of the joint portion 24 on the side opposite to the third pipe joint 33 toward the axial center position (central axis G) of the third pipe joint 33. In other words, in the third gap Z3, the inter-surface distance SD increases from the end of the joint portion 24 on the third pipe joint 33 side toward the axial center position (central axis G) of the third pipe joint 33. The third gap Z3 is a three-dimensional space extending in the first direction D1 (the axial direction of the third pipe joint 33).

As illustrated in FIG. 13, in the present description, for the straight plate portion 21X in the branch portion 27, the width of the straight plate portion 21X in the second direction D2 is defined as a first width α.

As illustrated in FIG. 12 and FIG. 13, in the present description, for the straight plate portion 21X in the outer edge joint portion 29, the width of the straight plate portion 21X in the second direction D2 is defined as a second width β.

As illustrated in FIG. 13, in the present description, a distance from an end on one side in the second direction D2 of the second pipe joint 32 to an end on the other side in the second direction D2 of the third pipe joint 33 is defined as a first distance W1. In the branch pipe 10, the first distance W1 is a distance larger than the thickness D of the branch portion 27.

As illustrated in FIG. 12, in the present description, a distance from an end on one side of the first pipe joint 31 in the second direction D2 to an end on one side of the joint portion 24 (outer edge joint portion 29) located on one side, and a distance from an end on the other side of the first pipe joint 31 in the second direction D2 to an end on the other side of the joint portion 24 (outer edge joint portion 29) located on the other side are defined as a second distance W2. Similarly, as illustrated in FIG. 13, a distance from an end on the other side of the second pipe joint 32 in the second direction D2 to an end on the other side of the joint portion 24 (outer edge joint portion 29) located on the other side, and a distance from an end on one side of the third pipe joint 33 in the second direction D2 to an end on one side of the joint portion 24 (outer edge joint portion 29) located on the one side are also defined as the second distance W2.

As illustrated in FIG. 12, FIG. 13, and FIG. 14, in the present description, the outer diameters of the first pipe joint 31, the second pipe joint 32, and the third pipe joint 33 constituting the branch pipe 10 are defined as a joint outer diameter rₜ. The joint outer diameter rₜ is a distance (radius) from each of the central axes G of the first pipe joint 31, the second pipe joint 32, and the third pipe joint 33 to each of the outer peripheral surfaces 31c, 32c, and 33c. The joint outer diameter rₜ is an outer diameter of a portion of the first pipe joint 31, the second pipe joint 32, and the third pipe joint 33 inserted into the branch pipe main body 20. Note that the joint outer diameters rₜ of the first pipe joint 31, the second pipe joint 32, and the third pipe joint 33 may be different from each other.

As illustrated in FIG. 14, the first plate-shaped member 21 constituting the branch pipe 10 includes a first curved portion 21c recessed toward the first surface 21a and a second curved portion 21d protruding toward the first surface 21a. In the present description, the bending radius of the first surface 21a of the second curved portion 21d is defined as a plate bending outer diameter rₛₒ.

Preferably, in the branch pipe 10 of the present disclosure, the first distance W1 satisfies Formula 1 below, and the plate bending outer diameter rₛₒ satisfies Formula 2 below. Formula 1: $W 1 \geq 2 √ \left({\left({r}_{t}+{r}_{so}\right)}^{2}-{{r}_{so}}^{2}\right) - 2 {r}_{t}$ (where W1 is a first distance, rₛₒ is a plate bending outer diameter, and rₜ is a joint outer diameter) Formula 2: ${r}_{so} \geq 2 t$ (where t is a plate thickness of the first plate-shaped member)

A stainless steel plate has a higher difficulty in bending than a steel plate or the like. The branch pipe 10 configured to satisfy the above Formulas 1 and 2 facilitates bending of the first plate-shaped member 21 and the second plate-shaped member 22 made of stainless steel. This facilitates production of the branch pipe main body 20.

Further, in the branch pipe 10 of the present disclosure, it is more preferable that the first distance W1 satisfies Formula 3 below. Formula 3: $W 1 \geq 2 √ \left({\left({r}_{t}+{r}_{so}\right)}^{2}-{{r}_{so}}^{2}\right) - {2 r}_{t} + α$ (where W1 is a first distance, and α is a first width)

The branch pipe 10 configured to satisfy the above Formula 3 can improve the strength of the branch pipe 10 by securing the first distance W1 including the first width α. Therefore, the branch pipe 10 configured to satisfy the above Formula 3 is suitable for use as a branch pipe for a single refrigerant made of carbon dioxide having a higher pressure than a conventional refrigerant or for a mixed refrigerant containing carbon dioxide.

Further preferably, in the branch pipe 10 of the present disclosure, the second width β satisfies Formula 4 below, and the second distance W2 satisfies Formula 5 below. Formula 4: $t \leq β \leq 20 t$ (where β is a second width, and t is a plate thickness of the first plate-shaped member) Formula 5: $W 2 \geq √ \left({\left({r}_{t}+{r}_{so}\right)}^{2}-{{r}_{so}}^{2}\right) - {r}_{t} + β$ (where W2 is a second distance, rₛₒ is a plate bending outer diameter, rₜ is a joint outer diameter, and β is a second width)

In the branch pipe 10 of the present disclosure, the strength of the branch pipe 10 can be improved by setting the second width β and the second distance W2 so as to satisfy the above Formulas 4 and 5. Note that the strength of the branch pipe main body 20 can be improved by increasing the second width β, but when the second width β is excessively increased, a local gap is likely to be generated between the first plate-shaped member 21 and the second plate-shaped member 22. When the brazing material flows into the gap, the strength of the branch pipe 10 is reduced. Further, when the second width β is increased, the use amount of the brazing material increases. In the branch pipe 10 of the present disclosure, by setting the second width β and the second distance W2 so as to satisfy the above Formula 4 and Formula 5, both the improvement of the strength of the branch pipe 10 and the reduction of the use amount of the brazing material can be achieved.

### [Modification of branch portion]

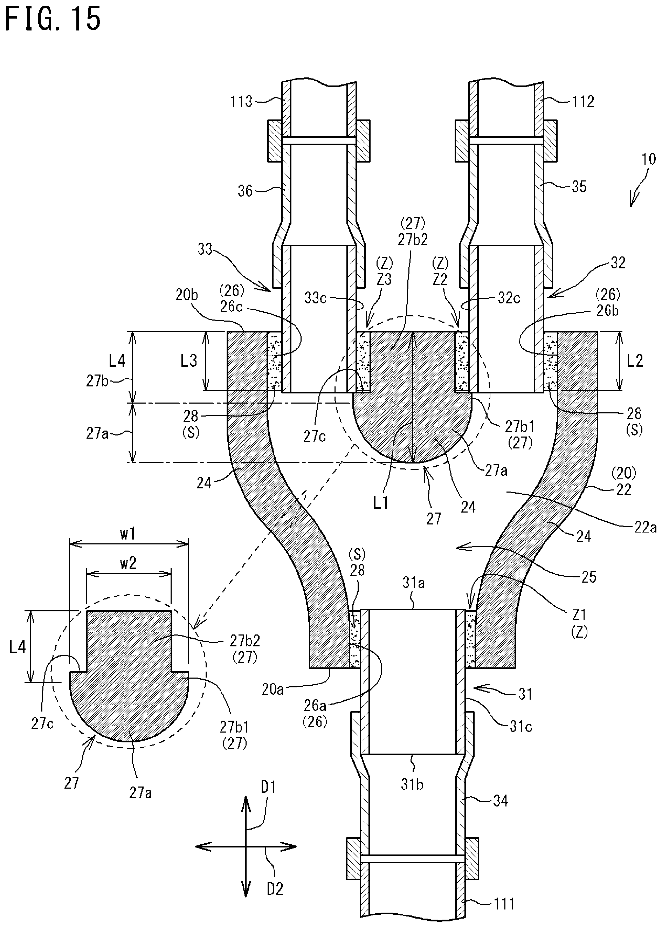

FIG. 15 is an explanatory view of a modification of the branch portion in the branch pipe. FIG. 15 illustrates a modification of the branch pipe 10. The branch pipe 10 illustrated in FIG. 15 is different from the above-described branch portion 27 (see FIG. 3) in the configuration of the branch portion 27 of the joint portion 24. In the branch pipe 10 illustrated in FIG. 15, the branch portion 27 includes a dividing portion 27a and rectifying portion 27b.

The dividing portion 27a divides the fluid flowing into the flow path 25 in the branch pipe main body 20 through the first pipe joint 31 to the second pipe joint 32 side and the third pipe joint 33 side. Note that the width of the dividing portion 27a in the second direction D2 is not constant in the first direction D1.

The rectifying portion 27b straightens the flow of the fluid divided by the dividing portion 27a. The rectifying portion 27b includes a first portion 27b1 located on a first end 20a side of the branch pipe main body 20 and a second portion 27b2 located on the second end 20b side of the branch pipe main body 20. A width w2 of the first portion 27b1 in the second direction D2 is constant in the first direction D1. A width w2 of the second portion 27b2 in the second direction D2 is constant in the first direction D1.

In the branch portion 27 according to the modification, the width w1 of the first portion 27b1 in the second direction D2 is larger than the width w2 of the second portion 27b2 in the second direction D2. Therefore, the rectifying portion 27b includes a stepped portion 27c formed at an end of the first portion 27b1 on the first end 20a side. Note that, preferably, the thick portions of the second pipe joint 32 and the third pipe joint 33 overlap the position of the side surface of the rectifying portion 27b (first portion 27b1) when viewed from the first direction D1. The width w1 of the first portion 27b1 is more preferably set to a width such that the inner peripheral surfaces of the second pipe joint 32 and the third pipe joint 33 in a state of being in contact with the stepped portion 27c are flush with the side surface of the rectifying portion 27b (first portion 27b1) in the second direction D2.

In the branch pipe 10 according to the modification, since the branch portion 27 (rectifying portion 27b) includes the stepped portion 27c, the second pipe joint 32 inserted into the second opening 26b and the third pipe joint 33 inserted into the third opening 26c can be positioned in the axial direction. The branch pipe 10 having such a configuration can easily position the second pipe joint 32 and the third pipe joint 33 in the second opening 26b and the third opening 26c. Furthermore, the branch pipe 10 having such a configuration can reduce a step between the rectifying portion 27b and the second pipe joint 32 and the third pipe joint 33, and this can suppress resistance received when the fluid flows out from the second opening 26b and the third opening 26c.

In the present embodiment, the case where the stepped portion 27c is provided in the branch portion 27 is illustrated, but in the branch pipe 10 according to the modification, a stepped portion (not illustrated) may be provided in the outer edge joint portion 29. In the branch pipe 10 according to the modification, the stepped portion 27c may be provided in the branch portion 27, and a stepped portion (not illustrated) may be provided in the outer edge joint portion 29.

In the branch pipe 10 according to the modification, the formation length L4 of the rectifying portion 27b in the first direction D1 is larger than the insertion margin L2 of the second opening 26b and the insertion margin L3 of the third opening 26c (L4 > L2, L4 > L3). The formation length L4 is a distance between an end of the rectifying portion 27b on the first end 20a side and an end of the rectifying portion 27b on the second end 20b side. The branch pipe 10 having such a configuration can reliably rectify the fluid flowing out from the second opening 26b and the third opening 26c by the rectifying portion 27b by securing the formation length L4 of the rectifying portion 27b.

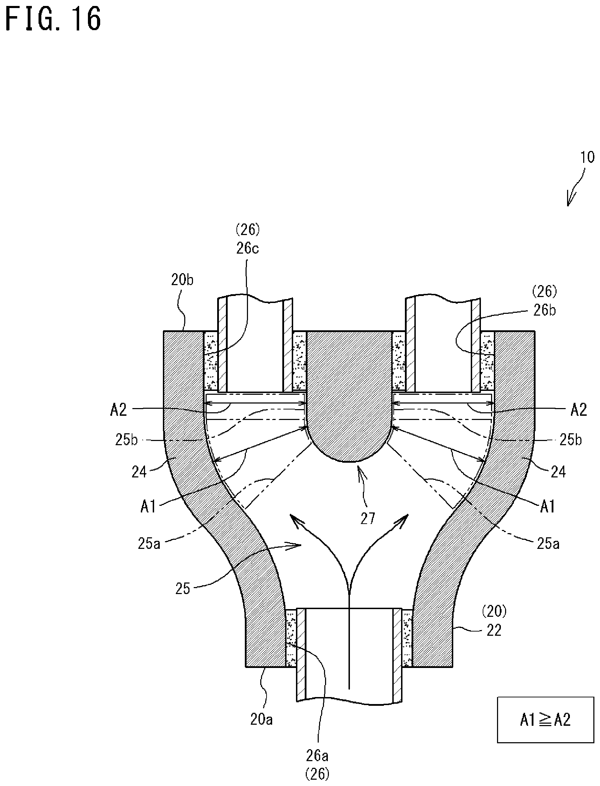

FIG. 16 is an explanatory view of a flow path of a branch pipe in a dividing portion and a rectifying portion. As illustrated in FIG. 16, in the branch pipe 10 according to the modification, the flow path 25 includes a first flow path 25a and a second flow path 25b. The first flow path 25a is the flow path 25 surrounded by the dividing portion 27a, the first plate-shaped member 21, and the second plate-shaped member 22. The second flow path 25b is the flow path 25 surrounded by the rectifying portion 27b (first portion 27b1), the first plate-shaped member 21, and the second plate-shaped member 22. In the branch pipe 10 according to the modification, a first flow path cross-sectional area A1 of the first flow path 25a has an area equal to or larger than a second flow path cross-sectional area A2 of the second flow path 25b (A1 ≥ A2). Note that, in the present description, the "first flow path cross-sectional area A1" means a minimum value of cross-sectional areas that appear when the first flow path 25a is cut along a plane orthogonal to the flow direction (velocity vector) of the fluid flowing through the first flow path 25a, and the "second flow path cross-sectional area A2" means a maximum value of cross-sectional areas that appear when the second flow path 25b is cut along a plane orthogonal to the flow direction (velocity vector) of the fluid flowing through the second flow path 25b. In other words, in the branch pipe 10 according to the modification, the flow path 25 leading from the first pipe joint 31 to the second pipe joint 32 and the flow path 25 leading from the first pipe joint 31 to the third pipe joint 33 are not narrowed by the first flow path 25a in the middle of the flow path 25. With the branch pipe 10 having such a configuration, it is possible to suppress the resistance received by the fluid from the dividing portion 27a in first flow path 25a.

Further preferably, in the branch pipe 10 according to the modification, the formation length L1 (see FIG. 15) of the branch portion 27 is set so as not to generate a portion where the flow path cross-sectional area is smaller than the first flow path cross-sectional area A1 and the second flow path cross-sectional area A2 in the flow path 25.

### [Functional effects of embodiments]

(1) The branch pipe 10 of the above embodiment is a branch pipe 10 that connects a first pipe 111, a second pipe 112, and a third pipe 113 and branches a fluid flowing through the first pipe 111 into the second pipe 112 and the third pipe 113, the branch pipe 10 including: a branch pipe main body 20 configured to include a first plate-shaped member 21 made of stainless steel and having a first surface 21a, and a second plate-shaped member 22 made of stainless steel and having a second surface 22a disposed opposite to the first surface 21a; a first pipe joint 31 having a first joint portion 34 connectable to the first pipe 111 at one end 31a in an axial direction; a second pipe joint 32 having a second joint portion 35 connectable to the second pipe 112 at one end 32a in the axial direction; and a third pipe joint 33 having a third joint portion 36 connectable to the third pipe 113 at one end 33a in the axial direction. The branch pipe main body 20 includes: a joint portion 24 that joins the first plate-shaped member 21 and the second plate-shaped member 22; a flow path 25 formed between the first surface 21a and the second surface 22a; and a first opening 26a, a second opening 26b, and a third opening 26c which are formed by the first plate-shaped member 21 and the second plate-shaped member 22 at an end in the fluid flow direction in the flow path 25 and communicate with the first pipe 111, the second pipe 112, and the third pipe 113, respectively. The first pipe joint 31 has another end 31b in the axial direction connected to the first opening 26a, the second pipe joint 32 has another end 32b in the axial direction connected to the second opening 26b, and the third pipe joint 33 has another end 33b in the axial direction connected to the third opening 26c. The branch pipe main body 20 includes: a sealing portion 28 that seals a first gap Z1 between an outer peripheral surface 31c of the first pipe joint 31 and the first opening 26a, a second gap Z2 between an outer peripheral surface 32c of the second pipe joint 32 and the second opening 26b, and a third gap Z3 between an outer peripheral surface 33c of the third pipe joint 33 and the third opening 26c. The sealing portion 28 includes: a brazing material layer S connecting the branch pipe main body 20 to the first pipe joint 31, the second pipe joint 32, and the third pipe joint 33.
   With the branch pipe 10 of the above embodiment, the branch pipe made of stainless steel can be obtained by subjecting a stainless steel plate to simple processing.
(2) In the branch pipe 10 of the above embodiment, the inter-surface distance SD, which is the distance between the first plate-shaped member 21 and the second plate-shaped member 22, increases in a portion where the first plate-shaped member 21 and the second plate-shaped member 22 form the first gap Z1, the second gap Z2, and the third gap Z3 from ends of the joint portion 24 opposite to the first pipe joint 31, the second pipe joint 32, and the third pipe joint 33 in directions toward central axes G of the first pipe joint 31, the second pipe joint 32, and the third pipe joint 33.
(3) In the branch pipe 10E illustrated in FIG. 9 and FIG. 10 and the branch pipe 10F illustrated in FIG. 11A and FIG. 11B, the first plate-shaped member 21 includes a volume reducing portion 60 that reduces an internal volume of at least one of the first gap Z1, the second gap Z2, or the third gap Z3.
   In the branch pipe 10E and the branch pipe 10F of the above embodiment, the gaps Z1, Z2, and Z3 between the first, second, and third openings 26a, 26b, and 26c and the pipe joints 31, 32, and 33 can be reduced by providing the volume reducing portion 60, and thus, it is possible to suppress the amount of the brazing material used for sealing the gaps Z1, Z2, and Z3 and to suppress the leakage of the fluid from the gaps Z1, Z2, and Z3 between the branch pipe main body 20 and the pipe joints 31, 32, and 33.
(4) In the branch pipe 10E illustrated in FIG. 9 and FIG. 10, the volume reducing portion 60 includes a first plate thickness portion 61 in which a plate thickness t of the first plate-shaped member 21 is a first plate thickness t1, and a second plate thickness portion 62 in which a plate thickness t of the first plate-shaped member 21 is a second plate thickness t2 smaller than the first plate thickness t1.
   With the branch pipe 10E of the above embodiment, the volume reducing portion 60 can be easily provided by providing the first plate thickness portion 61 and the second plate thickness portion 62 having different plate thicknesses t in the first plate-shaped member 21.
(5) In the branch pipe 10E illustrated in FIG. 9, the first plate-shaped member 21 includes a straight plate portion 21X and a curved plate portion 21Y, and the straight plate portion 21X is the second plate thickness portion 62.
   With the branch pipe 10E of the above embodiment, the volume reducing portion 60 can be easily provided by configuring the second plate thickness portion 62 with the straight plate portion 21X.
(6) In the branch pipe 10E illustrated in FIG. 10, the first plate-shaped member 21 includes a straight plate portion 21X and a curved plate portion 21Y, and the curved plate portion 21Y includes the second plate thickness portion 62.
   With the branch pipe 10E of the above embodiment, the volume reducing portion 60 can be easily provided by providing the second plate thickness portion 62 in the curved plate portion 21Y.
(7) In the branch pipe 10E illustrated in FIG. 9, the first plate-shaped member 21 includes the first plate thickness portion 61 in a portion forming at least one of the first gap Z1, the second gap Z2, or the third gap Z3.
   With the branch pipe 10E of the above embodiment, the volume reducing portion 60 can be easily provided by providing the first plate thickness portion 61 in the portion forming the gap Z in the first plate-shaped member 21.
(8) In the branch pipe 10F illustrated in FIG. 11A and FIG. 11B, the volume reducing portion 60 is configured by a protrusion 63 protruding from the first plate-shaped member 21 toward at least one of the first gap Z1, the second gap Z2, or the third gap Z3.
   With the branch pipe 10F of the above embodiment, the volume reducing portion 60 can be easily provided by providing the protrusion 63 at the portion forming the gap Z in the first plate-shaped member 21.
(9) In the branch pipe 10F illustrated in FIG. 11B, the first plate-shaped member 21 includes a back surface 21b that is a surface opposite to the first surface 21a, and a recess 64 formed in the back surface 21b located on a back side of a position of the protrusion 63.
   With the branch pipe 10F of the above embodiment, by pressing the back surface 21b of the first plate-shaped member 21 and providing the recess 64 in the back surface 21b, the protrusion 63 can be easily provided in the portion forming the gap Z in the first plate-shaped member 21. Accordingly, the volume reducing portion 60 can be easily provided.
(10) In the branch pipe 10 illustrated in FIG. 15, the branch pipe main body 20 includes a first end 20a having the first opening 26a, and a second end 20b having the second opening 26b and the third opening 26c. The joint portion 24 includes a branch portion 27 formed between the second opening 26b and the third opening 26c. The branch portion 27 includes a dividing portion 27a that is located on the first end 20a side of the branch portion 27 and divides the fluid flowing in from the first opening 26a to the second opening 26b side and the third opening 26c side; and a rectifying portion 27b extending in a first direction D1 substantially parallel to the axial direction of the second opening 26b and the third opening 26c from an end on the second end 20b side of the dividing portion 27a. In the branch pipe 10 of the above embodiment, a formation length L4 of the rectifying portion 27b in the first direction D1 is larger than an insertion margin L2 of the second pipe joint 32 in the second opening 26b and the insertion margin L3 of the third pipe joint 33 in the third opening 26c.
   With the branch pipe 10 of the above embodiment, the fluid flowing out from the second opening 26b and the third opening 26c can be reliably rectified by the rectifying portion 27b.
(11) In the branch pipe 10 illustrated in FIG. 16, the flow path 25 includes a first flow path 25a formed by the dividing portion 27a, the first plate-shaped member 21, and the second plate-shaped member 22, and a second flow path 25b formed by the rectifying portion 27b, the first plate-shaped member 21, and the second plate-shaped member 22, and a flow path cross-sectional area A1 of the first flow path 25a is equal to or larger than a flow path cross-sectional area A2 of the second flow path 25b.
   With the branch pipe 10 of the above embodiment, it is possible to suppress the resistance received by the fluid from the dividing portion 27a in the first flow path 25a.
(12) In the branch pipe 10 illustrated in FIG. 15, the rectifying portion 27b includes a first portion 27b1 on the first end 20a side and a second portion 27b2 on the second end 20b side, and a width w2 of the second portion 27b2 in a second direction D2 parallel to a mating surface of the first plate-shaped member 21 and the second plate-shaped member 22 in the branch portion 27 and orthogonal to the first direction D1 is smaller than a width w1 of the first portion 27b1 in the second direction D2.
   With the branch pipe 10 of the above embodiment, the second pipe joint 32 and the third pipe joint 33 can be easily positioned in the second opening 26b and the third opening 26c.
(13) In the branch pipe 10 of the above embodiment, the joint portion 24 includes a branch portion 27 formed between the second opening 26b and the third opening 26c, and a first distance W1 between the second pipe joint 32 and the third pipe joint 33 is larger than a thickness D of the branch portion 27.
   With the branch pipe 10 of the above embodiment, the joining strength between the first plate-shaped member 21 and the second plate-shaped member 22 in the branch portion 27 can be secured by securing the first distance (separation distance) W1 between the second pipe joint 32 and the third pipe joint 33.
(14) In the branch pipe 10 of the above embodiment, the first plate-shaped member 21 includes: a first curved portion 21c that is concave on the first surface 21a side and a second curved portion 21d that is convex on the first surface 21a side, and when a bending radius of the first surface 21a at the second curved portion 21d is defined as a plate bending outer diameter rₛₒ, outer diameters of the first pipe joint 31, the second pipe joint 32, and the third pipe joint 33 are defined as a joint outer diameter rₜ, a distance between the second pipe joint 32 and the third pipe joint 33 is defined as a first distance W1, and a plate thickness of the first plate-shaped member 21 is defined as a plate thickness t, the first distance W1 satisfies Formula 1 below, and the plate bending outer diameter rₛₒ satisfies Formula 2 below: Formula 1: $W 1 \geq 2 √ \left({\left({r}_{t}+{r}_{so}\right)}^{2}-{{r}_{so}}^{2}\right) - 2 {r}_{t}$ (where W1 is a first distance, rₛₒ is a plate bending outer diameter, and rₜ is a joint outer diameter) Formula 2: ${r}_{so} \geq 2 t$ (where t is a plate thickness of the first plate-shaped member)
   With the branch pipe 10 of the above embodiment, bending of the first plate-shaped member 21 and the second plate-shaped member 22 made of stainless steel is facilitated by securing the first distance (separation distance) W1 satisfying Formulas 1 and 2.
(15) In the branch pipe 10 of the above embodiment, the first plate-shaped member 21 includes a straight plate portion 21X and a curved plate portion 21Y, the joint portion 24 includes a branch portion 27 formed between the second opening 26b and the third opening 26c, the branch portion 27 includes the straight plate portion 21X, and when a width of the straight plate portion 21X in the branch portion 27 is defined as a first width α in a second direction D2 parallel to a mating surface of the first plate-shaped member 21 and the second plate-shaped member 22 in the branch portion 27 and orthogonal to a first direction D1 substantially parallel to the axial direction of the second opening 26b and the third opening 26c, the first distance W1 satisfies Formula 3 below: Formula 3: $W 1 \geq 2 √ \left({\left({r}_{t}+{r}_{so}\right)}^{2}-{{r}_{so}}^{2}\right) - {2 r}_{t} + α$ (where W1 is a first distance, and α is a first width)
   With the branch pipe 10 of the above embodiment, the strength of the branch pipe 10 can be improved by securing the first distance (separation distance) W1 so as to satisfy Formula 3.
(16) In the branch pipe 10 of the above embodiment, the first plate-shaped member 21 includes a straight plate portion 21X and a curved plate portion 21Y, and includes a first curved portion 21c that is concave on the first surface 21a side and a second curved portion 21d that is convex on the first surface 21a side, the joint portion 24 includes a branch portion 27 formed between the second opening 26b and the third opening 26c, and an outer edge joint portion 29 other than the branch portion 27, a bending radius of the first surface 21a at the second curved portion 21d is defined as a plate bending outer diameter rₛₒ, outer diameters of the first pipe joint 31, the second pipe joint 32, and the third pipe joint 33 are defined as a joint outer diameter rₜ, and a plate thickness of the first plate-shaped member 21 is defined as a plate thickness t, and when a width of the straight plate portion 21X in the outer edge joint portion 29 is defined as a second width β in a second direction D2 parallel to a mating surface of the first plate-shaped member 21 and the second plate-shaped member 22 in the branch portion 27 and orthogonal to a first direction D1 substantially parallel to an axial direction of the second opening 26b and the third opening 26c, the second width β satisfies Formula 4 below, and when a distance from the first pipe joint 31, the second pipe joint 32, and the third pipe joint 33 to an end of the outer edge joint portion 29 is defined as a second distance W2, the second distance W2 satisfies Formula 5 below: Formula 4: $t \leq β \leq 20 t$ (where rₛₒ is a plate bending outer diameter, rₜ is a joint outer diameter, β is a second width, and t is a plate thickness of the first plate-shaped member), and Formula 5: $W 2 \geq √ \left({\left({r}_{t}+{r}_{so}\right)}^{2}-{{r}_{so}}^{2}\right) - {r}_{t} + β$ (where W2 is a second distance).
   With the branch pipe 10 of the above embodiment, the strength of the branch pipe 10 can be improved by securing the second distance W2 from each of the pipe joints 31, 32, and 33 to the end of the outer edge joint portion 29 so as to satisfy Formulas 4 and 5.
(17) In the branch pipe 10 of the above embodiment, the first pipe 111, the second pipe 112, and the third pipe 113 are refrigerant pipes 110 through which a single refrigerant made of carbon dioxide or a mixed refrigerant containing carbon dioxide flows.
   The branch pipe 10 having the above configuration can be used as the refrigerant pipe 110 for a single refrigerant made of carbon dioxide having a higher pressure than that of the conventional refrigerant or for a mixed refrigerant containing carbon dioxide.
(18) The refrigeration apparatus 100 of the present disclosure includes a branch pipe 10.

According to the refrigeration apparatus 100 of the present embodiment, the branch pipe 10 obtained by subjecting a stainless steel plate to simple processing can be used to easily configure the refrigeration apparatus 100 including the refrigerant circuit 103 having a higher pressure than a conventional refrigerant circuit.

While the embodiments have been described above, it will be understood that various changes in forms and details can be made without departing from the gist and scope of the claims.

### REFERENCE SIGNS LIST

- 10:: branch pipe
- 10E:: branch pipe
- 20:: branch pipe main body
- 20a:: first end
- 20b:: second end
- 21:: first plate-shaped member
- 21a:: first surface
- 21b:: back surface
- 21X:: straight plate portion
- 21Y:: curved plate portion
- 22:: second plate-shaped member
- 22a:: second surface
- 24:: joint portion
- 25:: flow path
- 25a:: first flow path
- 25b:: second flow path
- 26a:: first opening
- 26b:: second opening
- 26c:: third opening
- 27:: branch portion
- 27a:: dividing portion
- 27b:: rectifying portion
- 27b1:: first portion
- 27b2:: second portion
- 28:: sealing portion
- 29:: outer edge joint portion
- 31:: first pipe joint
- 31a:: one end
- 31b:: other end
- 31c:: outer peripheral surface
- 32:: second pipe joint
- 32a:: one end
- 32b:: other end
- 32c:: outer peripheral surface
- 33:: third pipe joint
- 33a:: one end
- 33b:: other end
- 33c:: outer peripheral surface
- 34:: first joint portion
- 35:: second joint portion
- 36:: third joint portion
- 60:: volume reducing portion
- 61:: first plate thickness portion
- 62:: second plate thickness portion
- 63:: protrusion
- 64:: recess
- 100:: refrigeration apparatus
- 110:: refrigerant pipe
- 111:: first pipe
- 112:: second pipe
- 113:: third pipe
- S:: brazing material layer
- Z:: gap
- G:: central axis
- L2:: insertion margin (at second opening)
- L3:: insertion margin (at third opening)
- L4:: formation length (of rectifying portion)
- W1:: first distance
- W2:: second distance
- w1:: width (of first portion)
- w2:: width (of second portion)
- A1:: flow path cross-sectional area (of first channel)
- A2:: flow path cross-sectional area (of second channel)
- α:: first width
- β:: second width
- D:: thickness (of branch portion)
- t:: plate thickness (of first plate-shaped member)
- SD:: inter-surface distance (distance) (between first plate-shaped member and second plate-shaped member)

## Claims

1. A branch pipe (10) that connects a first pipe (111), a second pipe (112), and a third pipe (113) and branches a fluid flowing through the first pipe (111) into the second pipe (112) and the third pipe (113), the branch pipe (10) comprising:
a branch pipe main body (20) configured to include a first plate-shaped member (21) made of stainless steel and having a first surface (21a), and a second plate-shaped member (22) made of stainless steel and having a second surface (22a) disposed opposite to the first surface (21a);
a first pipe joint (31) having a first joint portion (34) connectable to the first pipe (111) at one end (31a) in an axial direction;
a second pipe joint (32) having a second joint portion (35) connectable to the second pipe (112) at one end (32a) in the axial direction; and
a third pipe joint (33) having a third joint portion (36) connectable to the third pipe (113) at one end (33a) in the axial direction,
the branch pipe main body (20) includes:
a joint portion (24) that joins the first plate-shaped member (21) and the second plate-shaped member (22);
a flow path (25) formed between the first surface (21a) and the second surface (22a); and
a first opening (26a), a second opening (26b), and a third opening (26c) which are formed by the first plate-shaped member (21) and the second plate-shaped member (22) at an end in the fluid flow direction in the flow path (25) and communicate with the first pipe (111), the second pipe (112), and the third pipe (113), respectively,
the first pipe joint (31) has another end (31b) in the axial direction connected to the first opening (26a),
the second pipe joint (32) has another end (32b) in the axial direction connected to the second opening (26b),
the third pipe joint (33) has another end (33b) in the axial direction connected to the third opening (26c),
the branch pipe main body (20) includes:
a sealing portion (28) that seals a first gap (Z1) between an outer peripheral surface (31c) of the first pipe joint (31) and the first opening (26a), a second gap (Z2) between an outer peripheral surface (32c) of the second pipe joint (32) and the second opening (26b), and a third gap (Z3) between an outer peripheral surface (33c) of the third pipe joint (33) and the third opening (26c), and
the sealing portion (28) includes:
a brazing material layer (S) connecting the branch pipe main body (20) to the first pipe joint (31), the second pipe joint (32), and the third pipe joint (33).

2. The branch pipe (10) according to claim 1, wherein a distance (SD) between the first plate-shaped member (21) and the second plate-shaped member (22) increases in a portion where the first plate-shaped member (21) and the second plate-shaped member (22) form the first gap (Z1), the second gap (Z2), and the third gap (Z3) from ends of the joint portion (24) opposite to the first pipe joint (31), the second pipe joint (32), and the third pipe joint (33) in directions toward central axes (G) of the first pipe joint (31), the second pipe joint (32), and the third pipe joint (33).

3. The branch pipe (10E) according to claim 1 or 2, wherein
the first plate-shaped member (21) includes:
a volume reducing portion (60) that reduces an internal volume of at least one of the first gap (Z1), the second gap (Z2), or the third gap (Z3).

4. The branch pipe (10E) according to claim 3, wherein the volume reducing portion (60) includes a first plate thickness portion (61) in which a plate thickness (t) of the first plate-shaped member (21) is a first plate thickness (t1), and a second plate thickness portion (62) in which a plate thickness (t) of the first plate-shaped member (21) is a second plate thickness (t2) smaller than the first plate thickness (t1).

5. The branch pipe (10E) according to claim 4, wherein
the first plate-shaped member (21) includes a straight plate portion (21X) and a curved plate portion (21Y), and
the straight plate portion (21X) is the second plate thickness portion (62).

6. The branch pipe (10E) according to claim 4, wherein
the first plate-shaped member (21) includes a straight plate portion (21X) and a curved plate portion (21Y), and
the curved plate portion (21Y) includes the second plate thickness portion (62).

7. The branch pipe (10E) according to claim 4, wherein the first plate-shaped member (21) includes the first plate thickness portion (61) in a portion forming at least one of the first gap (Z1), the second gap (Z2), or the third gap (Z3).

8. The branch pipe (10F) according to claim 3, wherein
the volume reducing portion (60) is configured by a protrusion (63) protruding from the first plate-shaped member (21) toward at least one of the first gap (Z1), the second gap (Z2), or the third gap (Z3).

9. The branch pipe (10F) according to claim 8, wherein
the first plate-shaped member (21) includes:
a back surface (21b) that is a surface opposite to the first surface (21a); and
a recess (64) formed in the back surface (21b) located on a back side of a position of the protrusion (63).

10. The branch pipe according to claim 1 or 2, wherein
the branch pipe main body (20) includes a first end (20a) having the first opening (26a), and a second end (20b) having the second opening (26b) and the third opening (26c),
the joint portion (24) includes a branch portion (27) formed between the second opening (26b) and the third opening (26c),
the branch portion (27) includes a dividing portion (27a) that is located on the first end (20a) side of the branch portion (27) and divides the fluid flowing in from the first opening (26a) to the second opening (26b) side and the third opening (26c) side, and a rectifying portion (27b) extending in a first direction (D1) substantially parallel to the axial direction of the second opening (26b) and the third opening (26c) from an end on the second end (20b) side of the dividing portion (27a), and
a formation length (L4) of the rectifying portion (27b) in the first direction (D1)
is larger than an insertion margin (L2) of the second pipe joint (32) in the second opening (26b) and an insertion margin (L3) of the third pipe joint (33) in the third opening (26c).

11. The branch pipe according to claim 10, wherein
the flow path (25) includes a first flow path (25a) formed by the dividing portion (27a), the first plate-shaped member (21), and the second plate-shaped member (22), and a second flow path (25b) formed by the rectifying portion (27b), the first plate-shaped member (21), and the second plate-shaped member (22), and
a flow path cross-sectional area (A1) of the first flow path (25a) is equal to or larger than a flow path cross-sectional area (A2) of the second flow path (25b).

12. The branch pipe (10) according to claim 10, wherein
the rectifying portion (27b) includes:
a first portion (27b1) on the first end (20a) side and a second portion (27b2) on the second end (20b) side, and
a width (w2) of the second portion (27b2) in a second direction (D2) parallel to a mating surface of the first plate-shaped member (21) and the second plate-shaped member (22) in the branch portion (27) and orthogonal to the first direction (D1) is smaller than a width (w1) of the first portion (27b1) in the second direction (D2).

13. The branch pipe (10) according to claim 1 or 2, wherein
the joint portion (24) includes a branch portion (27) formed between the second opening (26b) and the third opening (26c), and
a first distance (W1) between the second pipe joint (32) and the third pipe joint (33) is larger than a thickness (D) of the branch portion (27).

14. The branch pipe (10) according to claim 1 or 2, wherein
the first plate-shaped member (21) includes:
a first curved portion (21c) that is concave on the first surface (21a) side and a second curved portion (21d) that is convex on the first surface (21a) side, and
when a bending radius of the first surface (21a) at the second curved portion (21d) is defined as a plate bending outer diameter (rₛₒ),
outer diameters of the first pipe joint (31), the second pipe joint (32), and the third pipe joint (33) are defined as a joint outer diameter (rₜ),
a distance between the second pipe joint (32) and the third pipe joint (33) is defined as a first distance (W1), and
a plate thickness of the first plate-shaped member (21) is defined as a plate thickness (t),
the first distance (W1) satisfies Formula 1 below, and
the plate bending outer diameter (rₛₒ) satisfies Formula 2 below: Formula 1: $W 1 \geq 2 √ \left({\left({r}_{t}+{r}_{so}\right)}^{2}-{{r}_{so}}^{2}\right) - 2 {r}_{t}$
(where W1 is a first distance, rₛₒ is a plate bending outer diameter, and rₜ is a joint outer diameter) Formula 2: ${r}_{so} \geq 2 t$
(where t is a plate thickness of the first plate-shaped member).

15. The branch pipe (10) according to claim 14, wherein
the first plate-shaped member (21) includes a straight plate portion (21X) and a curved plate portion (21Y),
the joint portion (24) includes a branch portion (27) formed between the second opening (26b) and the third opening (26c),
the branch portion (27) includes the straight plate portion (21X), and
when a width of the straight plate portion (21X) in the branch portion (27) is defined as a first width (α) in a second direction (D2) parallel to a mating surface of the first plate-shaped member (21) and the second plate-shaped member (22) in the branch portion (27) and orthogonal to a first direction (D1) substantially parallel to the axial direction of the second opening (26b) and the third opening (26c),
the first distance (W1) satisfies Formula 3 below: Formula 3: $W 1 \geq 2 √ \left({\left({r}_{t}+{r}_{so}\right)}^{2}-{{r}_{so}}^{2}\right) - {2 r}_{t} + α$
(where W1 is a first distance, and α is a first width).

16. The branch pipe (10) according to claim 1 or 2, wherein
the first plate-shaped member (21) includes a straight plate portion (21X) and a curved plate portion (21Y), and
includes a first curved portion (21c) that is concave on the first surface (21a) side and a second curved portion (21d) that is convex on the first surface (21a) side,
the joint portion (24) includes a branch portion (27) formed between the second opening (26b) and the third opening (26c), and an outer edge joint portion (29) other than the branch portion (27),
a bending radius of the first surface (21a) at the second curved portion (21d) is defined as a plate bending outer diameter (rₛₒ),
outer diameters of the first pipe joint (31), the second pipe joint (32), and the third pipe joint (33) are defined as a joint outer diameter (rₜ), and
a plate thickness of the first plate-shaped member (21) is defined as a plate thickness (t), and
when a width of the straight plate portion (21X) in the outer edge joint portion (29) is defined as a second width (β) in a second direction (D2) parallel to a mating surface of the first plate-shaped member (21) and the second plate-shaped member (22) in the branch portion (27) and orthogonal to a first direction (D1) substantially parallel to an axial direction of the second opening (26b) and the third opening (26c),
the second width (β) satisfies Formula 4 below, and
when a distance from the first pipe joint (31), the second pipe joint (32), and the third pipe joint (33) to an end of the outer edge joint portion (29) is defined as a second distance (W2),
the second distance (W2) satisfies Formula 5 below: Formula 4: $t \leq β \leq 20 t$
(where β is a second width, and t is a plate thickness of the first plate-shaped member), and Formula 5: $W 2 \geq √ \left({\left({r}_{t}+{r}_{so}\right)}^{2}-{{r}_{so}}^{2}\right) - {r}_{t} + β$
(where W2 is a second distance, rₛₒ is a plate bending outer diameter, rₜ is a joint outer diameter, and β is a second width).

17. The branch pipe (10) according to claim 1 or 2, wherein
the first pipe (111), the second pipe (112), and the third pipe (113)
are refrigerant pipes (110) through which a single refrigerant made of carbon dioxide or a mixed refrigerant containing carbon dioxide flows.

18. A refrigeration apparatus (100) comprising the branch pipe (10) according to claim 1 or 2.
